Europäisches Patentamt

(19) European Patent Office

Office européen des brevets

(11) **EP 0 743 217 A2**

(12) # EUROPEAN PATENT APPLICATION

(43) Date of publication:
20.11.1996 Bulletin 1996/47

(51) Int. Cl.$^6$: **B60K 6/04**

(21) Application number: 96108015.7

(22) Date of filing: 20.05.1996

| | |
|---|---|
| (84) Designated Contracting States:<br>**DE FR GB**<br><br>(30) Priority: 19.05.1995 JP 145575/95<br>09.08.1995 JP 225869/95<br>29.08.1995 JP 245462/95<br>29.08.1995 JP 245463/95<br>29.08.1995 JP 245464/95<br>04.09.1995 JP 251944/95<br>19.09.1995 JP 266475/95<br>22.09.1995 JP 269241/95<br>22.09.1995 JP 269242/95<br>22.09.1995 JP 269243/95<br>24.10.1995 JP 300742/95<br>15.12.1995 JP 347862/95 | (71) Applicant: **TOYOTA JIDOSHA KABUSHIKI KAISHA**<br>**Aichi-ken 471 (JP)**<br><br>(72) Inventors:<br>• **Yamada, Eiji**<br>**Toyota-shi, Aichi-ken, 471 (JP)**<br>• **Miyatani, Takao**<br>**Toyota-shi, Aichi-ken, 471 (JP)**<br>• **Kawabata, Yasumoto**<br>**Toyota-shi, Aichi-ken, 471 (JP)**<br>• **Suga, Hiroshi**<br>**Toyota-shi, Aichi-ken, 471 (JP)**<br><br>(74) Representative: **KUHNEN, WACKER & PARTNER**<br>**Alois-Steinecker-Strasse 22**<br>**D-85354 Freising (DE)** |

(54) **Hybrid vehicle power output apparatus and method of controlling the same during engine braking**

(57) A power output apparatus of the present invention includes an engine (50), a clutch motor (30) and an assist motor (40) connecting with a crankshaft (56) of the engine (50), and a controller (80) for controlling the clutch motor (30), the assist motor (40), and the engine (50). When a braking torque is applied from the clutch motor (30) to a drive shaft (22), the engine (50) is raced by a reaction force of the braking torque. When fuel injection is stopped under such condition, the engine (50) rotates at a revolving speed to make the reaction force balance with a friction of piston sliding movement and the like. The braking torque is applied to the drive shaft 22 by regenerative control of the clutch motor (30) when the revolving speed of the engine (50) is less than the revolving speed of the drive shaft (22), and by power control of the clutch motor (30) when the revolving speed of the engine (50) is greater than the revolving speed of the drive shaft (22).

Fig. 1

# Description

## BACKGROUND OF THE INVENTION

### Field of the Invention

The present invention relates to a power output apparatus and a method of controlling the same, or more particularly to a power output apparatus for efficiently transmitting or utilizing power generated by an engine as well as to a method of controlling such a power output apparatus.

### Description of the Prior Art

In conventionally proposed power output apparatus mounted on a vehicle, an output shaft of an engine is electromagnetically connected to a drive shaft linked with a rotor of a motor by means of an electromagnetic coupling, so that power of the engine is transmitted to the drive shaft (as disclosed in, for example, JAPANESE PATENT LAYING-OPEN GAZETTE No. 49-43311). The electromagnetic coupling of the power output apparatus transmits part of the power of the engine to the drive shaft by electromagnetic connection, and supplies a regenerative power generated by sliding motions of the electromagnetic coupling to the motor and secondary cells connected in parallel. When the power transmitted to the drive shaft by means of the electromagnetic coupling is insufficient for a torque of the drive shaft, the motor applies an additional torque to the drive shaft with the regenerative power generated by the electromagnetic coupling or the power stored in the secondary cells. In this conventional power output apparatus, in order to effect braking of the drive shaft, the motor works as a generator to convert an energy of rotational motion of the drive shaft to an electrical energy and charge the secondary cells with the regenerative energy.

In the known power output apparatus, the motor plays a major role in the application of the braking force to the drive shaft. The motor is required to have a large capacity for generating a sufficiently large braking force in case of abrupt braking. The motor with a large capacity is rather bulky and occupies a relatively large space in the limited space of a vehicle. The large capacity also leads to large energy consumption for driving the motor and generating a required power. The motor with a large capacity is accordingly not preferable from the viewpoints of energy efficiency and space saving.

A technique proposed for restricting the required capacity of the motor is to utilize a braking mechanism by mechanical friction. This technique, however, does not recover the energy of rotational motion of the drive shaft, which simply disappears as a thermal energy, thereby being unpreferable from the viewpoint of energy efficiency.

In the known power output apparatus, when the secondary cells are in a charging state close to a full charge, the regenerative power by the motor can not be stored in the secondary cells to effect braking by the motor.

## SUMMARY OF THE INVENTION

One object of the present invention is thus to provide a space-saving power output apparatus with a high energy efficiency, and a method of controlling such a power output apparatus.

Another object of the invention is to provide a power output apparatus, which effects braking by a motor even when secondary cells are in a charging state close to a full charge, and a method of controlling such a power output apparatus.

At least part of the above object is realized by a first power output apparatus for outputting a power to a drive shaft. The apparatus comprises: an engine having an output shaft; a clutch motor comprising a first rotor connected with the output shaft of the engine and a second rotor connected with the drive shaft, the second rotor being coaxial to and rotatable relative to the first rotor, the first and second rotors being electromagnetically connected with each other, whereby power is transmitted between the output shaft of the engine and the drive shaft via the electromagnetic connection of the first and second rotors; a clutch motor-driving circuit for controlling a degree of the electromagnetic connection of the first and second rotors of the clutch motor and regulating rotation of the second rotor relative to the first rotor; a storage battery being charged with power regenerated by the clutch motor via the clutch motor-driving circuit, and discharging power required for driving the clutch motor via the clutch motor-driving circuit; and braking control means for controlling the clutch motor-driving circuit to enable the clutch motor to apply a braking torque to the drive shaft, and making the engine in a predetermined operating condition, so as to brake rotation of the drive shaft.

The first power output apparatus of the invention can effect braking of the drive shaft linked with the second rotor by means of the clutch motor.

In accordance with one aspect of the invention, the first power output apparatus, the braking control means comprises means for controlling the clutch motor-driving circuit to allow the first rotor and the second rotor of the clutch motor to be electromagnetically locked.

In accordance with another aspect of the invention, the first power output apparatus, the braking control means comprises means for controlling the clutch motor based on a difference between a revolving speed of the first rotor and a revolving speed of the second rotor. In accordance with one aspect of this structure, the first power output apparatus further comprises battery condition measuring means for measuring condition of the storage battery. In this structure, the braking control means further comprises means for controlling the revolving speed of the first rotor to a predetermined value, which is greater than the revolving speed of the second rotor, when the condition of the storage battery measured by the battery condition mesuring means represents a predetermined charging condition close to a full charge.

The invention is also directed to a second power output apparatus for outputting a power to a drive shaft. The apparatus comprises: an engine having an output shaft; a clutch motor comprising a first rotor connected with the output shaft of the engine and a second rotor connected with the drive shaft, the second rotor being coaxial to and rotatable relative to the first rotor, the first and second rotors being electromagnetically connected with each other, whereby power is transmitted between the output shaft of the engine and the drive shaft via the electromagnetic connection of the first and second rotors; a clutch motor-driving circuit for controlling a degree of the electromagnetic connection of the first and second rotors of the clutch motor and regulating rotation of the second rotor relative to the first rotor; an assist motor connected with the drive shaft; an assist motor-driving circuit for driving and controlling the assist motor; a storage battery being charged with power regenerated by the clutch motor via the clutch motor-driving circuit, being charged with power regenerated by the assist motor via the assist motor-driving circuit, discharging power required for driving the clutch motor via the clutch motor-driving circuit, and discharging power required for driving the assist motor via the assist motor-driving circuit; and braking control means for controlling the clutch motor-driving circuit and the assist motor-driving circuit to enable the clutch motor and the assist motor to apply a braking torque to the drive shaft, and making the engine in a predetermined operating condition, so as to brake rotation of the drive shaft.

The second power output apparatus of the invention can effect braking of the drive shaft kinked with the second rotor by means of the clutch motor and the assist motor.

In accordance with one aspect of the invention, the second power output apparatus further comprises: braking torque calculation means for computing a braking torque applied to brake the drive shaft, in response to an operation of an operator; and braking torque distribution means for distributing the braking torque computed by the braking torque calculation means into a first braking torque applied from the clutch motor to the drive shaft and a second braking torque applied from the assist motor to the drive shaft. In this structure the braking control means further comprises means for controlling the clutch motor-driving circuit and the assist motor-driving circuit to enable the clutch motor and the assist motor to apply the braking torque to the drive shaft, based on the distribution of the braking torque determined by the braking torque distribution means.

In accordance with one aspect of the invention, a third power output apparatus for outputting a power to a drive shaft comprises: an engine having an output shaft; a complex motor comprising a first rotor connected with the output shaft of the engine, a second rotor connected with the drive shaft being coaxial to and rotatable relative to the first rotor, and a stator for rotating the second rotor, the first rotor and the second rotor constituting a first motor, the second rotor and the stator constituting a second motor; a first motor-driving circuit for driving and controlling the first motor in the complex motor; a second motor-driving circuit for driving and controlling the second motor in the complex motor; a storage battery being charged with power regenerated by the first motor via the first motor-driving circuit, being charged with power regenerated by the second motor via the second motor-driving circuit, discharging power required for driving the first motor via the first motor-driving circuit, and discharging power required for driving the second motor via the second motor-driving circuit; and braking control means for controlling the first motor-driving circuit to enable the first motor to apply a first braking torque to the drive shaft, controlling the second motor-driving circuit to enable the second motor to apply a second braking torque to the drive shaft via the second rotor, and making the engine in a predetermined operating condition, so as to brake rotation of the drive shaft.

The third power output apparatus of the invention can effect braking of the drive shaft by means of the first motor and the second motor .

In accordance with one aspect of the invention, the third power output apparatus further comprises: braking torque calculation means for computing a braking torque applied to brake the drive shaft, in response to an operation of an operator; and braking torque distribution means for distributing the braking torque computed by the braking torque calculation means into the first braking torque applied from the first motor to the drive shaft and the second braking torque applied from the second motor to the drive shaft via the second rotor. In this structure, the braking control means further comprises means for controlling the first motor-driving circuit to enable the first motor to apply the first braking torque to the drive shaft, and controls the second motor-driving circuit to enable the second motor to apply the second braking torque to the drive shaft via the second rotor, based on the distribution of the braking torque determined by the braking torque distribution means. In accordance with another aspect of the invention, a fourth power output apparatus for outputting a power to a drive shaft comprises: an engine having an output shaft; a clutch motor comprising a first rotor connected with the output shaft of the engine and a second rotor connected with the drive shaft, the second rotor being coaxial to and rotatable relative to the first rotor, the first and second rotors being electromagnetically connected with each other, whereby power is transmitted between the output shaft of the engine and the drive shaft via the electromagnetic connection of the first and second rotors; a clutch motor-driving circuit for controlling a degree of the electromagnetic connection of the first and second rotors of the clutch motor and regulating rotation of the second rotor relative to the first rotor; an assist motor connected with the output shaft of the engine; an assist motor-driving circuit for driving and controlling the assist motor; a storage battery being charged with power regenerated by the clutch motor via the clutch motor-driving circuit, being charged with power regenerated by the assist motor via the assist motor-driving circuit, discharging power required for driving the clutch motor via the clutch motor-driving circuit, and discharging power required for driving the assist motor via the assist motor-driving circuit; and braking control means for controlling the clutch motor-driving circuit to enable the clutch motor to apply a first braking torque to the drive shaft, controlling the assist motor-driving circuit to enable the assist motor to apply a second braking torque to the output shaft of the engine, and making the engine in a predetermined operating condition, so as to brake rotation of the drive shaft.

The fourth power output apparatus of the invention can effect braking of the output shaft of the engine by means of the assist motor and braking of the drive shaft by means of the clutch motor.

In accordance with one aspect of the invention, the fourth power output apparatus further comprises: braking torque calculation means for computing a braking torque applied to brake the drive shaft, in response to an operation of an operator; and braking torque distribution means for distributing the braking torque computed by the braking torque calculation means into the first braking torque applied from the clutch motor to the drive shaft and the second braking torque applied from the assist motor to the output shaft of the engine. In this structure the braking control means further comprises means for controlling the clutch motor-driving circuit to enable the clutch motor to apply the first braking torque to the drive shaft, and controls the assist motor-driving circuit to enable the assist motor to apply the second braking torque to the output shaft of the engine, based on the distribution of the braking torque determined by the braking torque distribution means.

In accordance with still another aspect of the invention, a fifth power output apparatus for outputting a power to a drive shaft comprises: an engine having an output shaft; a complex motor comprising a first rotor connected with the output shaft of the engine, a second rotor connected with the drive shaft being coaxial to and rotatable relative to the first rotor, and a stator for rotating the first rotor, the first rotor and the second rotor constituting a first motor, the first rotor and the stator constituting a second motor; a first motor-driving circuit for driving and controlling the first motor in the complex motor; a second motor-driving circuit for driving and controlling the second motor in the complex motor; a storage battery being charged with power regenerated by the first motor via the first motor-driving circuit, being charged with power regenerated by the second motor via the second motor-driving circuit, discharging power required for driving the first motor via the first motor-driving circuit, and discharging power required for driving the second motor via the second motor-driving circuit; and braking control means for controlling the first motor-driving circuit to enable the first motor to apply a first braking torque to the drive shaft, controlling the second motor-driving circuit to enable the second motor to apply a second braking torque to the output shaft of the engine via the first rotor, and making the engine in a predetermined operating condition, so as to brake rotation of the drive shaft.

The fifth power output apparatus of the invention can effect braking of the drive shaft by means of the first motor and braking of the output shaft of the engine via the first rotor by means of the second motor.

In accordance with one aspect of the invention, the fifth power output apparatus further comprises: braking torque calculation means for computing a braking torque applied to brake the drive shaft, in response to an operation of an operator; and braking torque distribution means for distributing the braking torque computed by the braking torque calculation means into the first braking torque applied from the first motor to the drive shaft and the second braking torque applied from the second motor to the output shaft of the engine via the first rotor. In this structure, the braking control means comprises means for controlling the first motor-driving circuit to enable the first motor to apply the first braking torque to the drive shaft, and controls the second motor-driving circuit to enable the second motor to apply the second braking torque to the output shaft of the engine via the first rotor, based on the distribution of the braking torque determined by the braking torque distribution means.

The invention is also directed to a first method of controlling a power output apparatus for outputting a power to a drive shaft. The method comprises the steps of: (a) providing an engine having an output shaft; a clutch motor comprising a first rotor connected with the output shaft of the engine and a second rotor connected with the drive shaft, the second rotor being coaxial to and rotatable relative to the first rotor, the first and second rotors being electromagnetically connected with each other, whereby power is transmitted between the output shaft of the engine and the drive shaft via the electromagnetic connection of the first and second rotors; and a storage battery being charged with power regenerated by the clutch motor, and discharging power required for driving the clutch motor; (b) enabling the clutch motor to apply a braking torque to the drive shaft and making the engine in a predetermined operating condition, so as to brake rotation of the drive shaft.

The invention is another directed to a second method of controlling a power output apparatus for outputting a power to a drive shaft. The method comprises the steps of: (a) providing an engine having an output shaft; a clutch motor comprising a first rotor connected with the output shaft of the engine and a second rotor connected with the drive shaft, the second rotor being coaxial to and rotatable relative to the first rotor, the first and second rotors being electromagnetically connected with each other, whereby power is transmitted between the output shaft of the engine and the drive shaft via the electromagnetic connection of the first and second rotors; an assist motor connected with the drive shaft; and a storage battery being charged with power regenerated by the clutch motor, being charged with power regenerated by the assist motor, discharging power required for driving the clutch motor, and discharging power required for driving the assist motor; (b) enabling the clutch motor and the assist motor to apply a braking torque to the drive shaft and meking the engine in a predetermined operating condition, so as to brake rotation of the drive shaft.

In accordance with one aspect of the invention, the second method further comprises the stepe of: (c) computing the braking torque applied to brake the drive shaft, in response to an operation of an operator; (d) distributing the braking torque computed in the step (c) into a first braking torque applied from the clutch motor to the drive shaft and a second braking torque applied from the assist motor to the drive shaft; and (e) enabling the clutch motor and the assist motor to apply the first and second braking torque to the drive shaft, based on the distribution of the braking torque determined in the step (d).

The invention is further directed to a third method of controlling a power output apparatus for outputting a power to a drive shaft. The method comprises the steps of: (a) providing an engine having an output shaft; a clutch motor comprising a first rotor connected with the output shaft of the engine and a second rotor connected with the drive shaft,the second rotor being coaxial to and rotatable relative to the first rotor, the first and second rotors being electromagnetically connected with each other, whereby power is transmitted between the output shaft of the engine and the drive shaft via the electromagnetic connection of the first and second rotors; an assist motor connected with the output shaft of the engine; and a storage battery being charged with power regenerated by the clutch motor, being charged with power regenerated by the assist motor, discharging power required for driving the clutch motor , and discharging power required for driving the assist motor; (b) enabling the clutch motor to apply a first braking torque to the drive shaft, enabling the assist motor to apply a second braking torque to the output shaft of the engine, and making the engine in a predetermined operating condition, so as to brake rotation of the drive shaft.

In accordance with one aspect of the invention, the third method further comprises the stepe of: (c) computing a braking torque applied to brake the drive shaft, in response to an operation of an operator; (d) distributing the braking torque computed in the step (c) into the first braking torque applied from the clutch motor to the drive shaft and the second braking torque applied from the assist motor to the output shaft of the engine; and (e) enabling the clutch motor to apply the first braking torque to the drive shaft, and enabling the assist motor to apply the second braking torque to the output shaft of the engine, based on the distribution of the braking torque determined in the step (d).

These and other objects, features, aspects, and advantages of the present invention will become more apparent from the following detailed description of the preferred embodiments with the accompanying drawings.

**BRIEF DESCRIPTION OF THE DRAWINGS**

Fig. 1 is a schematic view illustrating a typical structure of a power output apparatus 20 as a first embodiment according to the present invention;

Fig. 2 is a cross sectional view illustrating structure of a clutch motor 30 and an assist motor 40 included in the power output apparatus 20 of Fig. 1;

Fig. 3 is a schematic view illustrating a general structure of a vehicle with an engine 50 and the power output apparatus 20 of Fig. 1 incorporated therein;

Fig. 4 is a graph showing the torque T plotted against the revolving speed N;

Fig. 5 is a graph showing the relationship between the torque Tc acting as an external force and the revolving speed Ne of the engine 50 under the condition of ceased fuel injection;

Fig. 6 is a graph showing the revolving speed Nd of the drive shaft 22 plotted against the time t and the state of the clutch motor 30 when a negative value Tc(A) is set to the torque Tc of the clutch motor 30;

Fig. 7 is a graph showing the revolving speed Nd of the drive shaft 22 plotted against the time t and the state of the clutch motor 30 when a negative value Tc(B) is set to the torque Tc of the clutch motor 30;

Fig. 8 is a graph illustrating the relationship between the torque Tc working as the external force and the revolving speed Ne of the engine 50 under the condition of injecting a given amount of fuel;

Fig. 9 is a graph showing the revolving speed Nd of the drive shaft 22 plotted against the time t and the state of the clutch motor 30 when a negative torque Tc is set in the clutch motor 30 under the condition of injecting a given amount of fuel;

Fig. 10 is a graph showing the revolving speed Nd of the drive shaft 22 plotted against the time t when the difference between the revolving speed Ne of the engine 50 and the revolving speed Nd of the drive shaft 22 is controlled to be constant;

Fig. 11 is a flowchart showing a clutch motor control routine applied to control the clutch motor 30;

Fig. 12 is a flowchart showing a braking process routine executed by the controller 80;

Fig. 13 is a flowchart showing a braking torque control routine executed by the controller 80;

Fig. 14 is a graph showing the chargeable power plotted against the residual capacity BRM of the battery 94;

Fig. 15 is a flowchart showing an assist motor control routine applied to control the assist motor 40;

Fig. 16 is a flowchart showing a continuous braking process routine executed by the controller 80;

Fig. 17 is a flowchart showing a modified part of the continuous braking process routine of Fig. 16;

Fig. 18 schematically illustrates another power output apparatus 20A as a modification of the power output apparatus 20 of the first embodiment;

Fig. 19 schematically illustrates structure of a power output apparatus 20B as a second embodiment according to the present invention;

Fig. 20 is a flowchart showing a braking torque control routine executed by the controller 80 in the second embodiment;

Fig. 21 is a flowchart showing a continuous braking process routine executed by the controller 80 in the second embodiment;

Fig. 22 schematically illustrates another power output apparatus 20C as a modification of the power output apparatus 20B of the second embodiment;

Fig. 23 schematically illustrates still another power output apparatus 20D as another modification of the power output apparatus 20B of the second embodiment;

Fig. 24 shows a braking torque of the clutch motor 30 acting while the vehicle moves backward; and

Fig. 25 is a graph showing the revolving speed Nd of the drive shaft 22 plotted against the time t and the state of the clutch motor 30 during the braking procedure via the clutch motor 30 under the backward driving condition.

## DESCRIPTION OF THE PREFERRED EMBODIMENTS

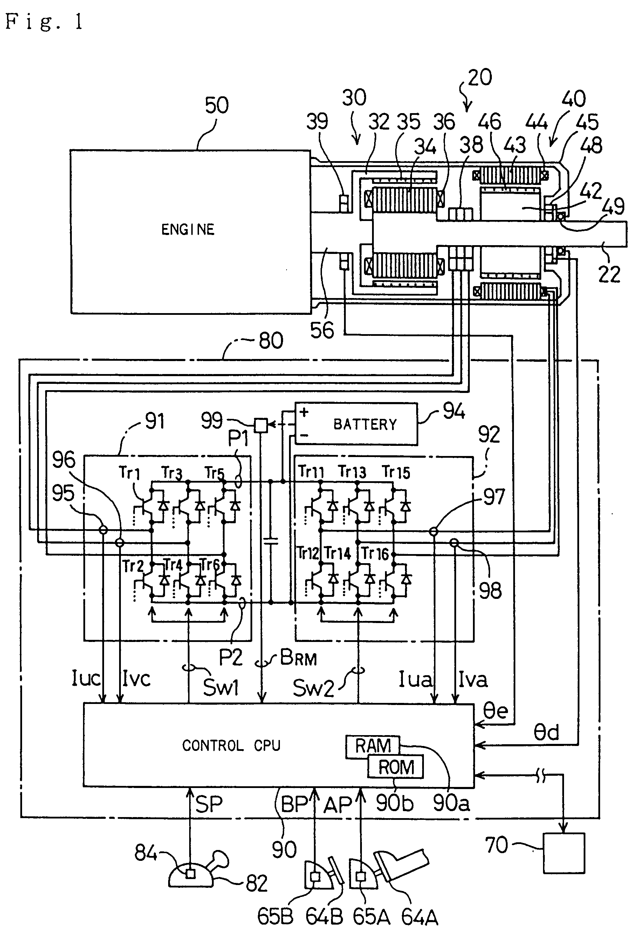

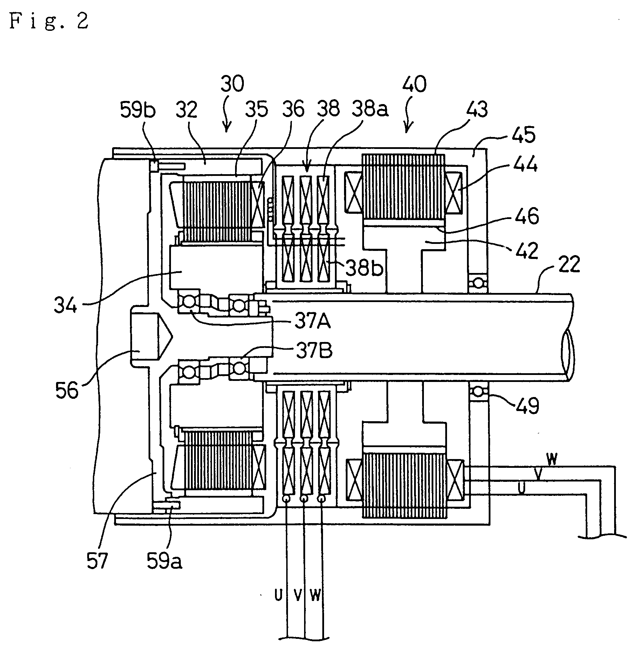

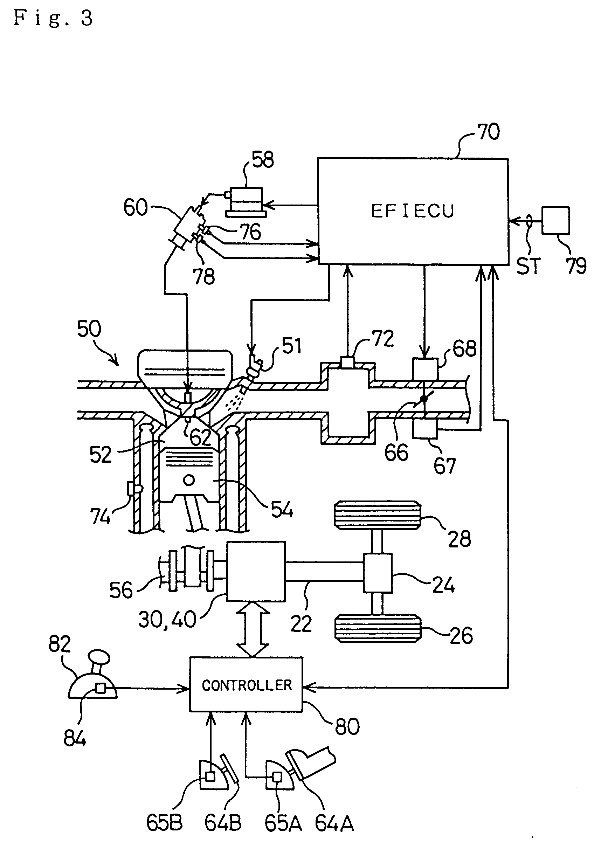

Fig. 1 is a schematic view illustrating structure of a power output apparatus 20 as a first embodiment according to the present invention; Fig. 2 is a cross sectional view illustrating detailed structures of a clutch motor 30 and an assist motor 40 included in the power output apparatus 20 of Fig. 1; and Fig. 3 is a schematic view illustrating a general structure of a vehicle with the power output apparatus 20 of Fig. 1 incorporated therein. The general structure of the vehicle is described first as a matter of convenience.

Referring to Fig. 3, the vehicle is provided with an engine 50 driven by gasoline as a power source. The air ingested from an air supply system via a throttle valve 66 is mixed with fuel, that is, gasoline in this embodiment, injected from a fuel injection valve 51. The air/fuel mixture is supplied into a combustion chamber 52 to be explosively ignited and burned. Linear motion of a piston 54 pressed down by the explosion of the air/fuel mixture is converted to rotational motion of a crankshaft 56. The throttle valve 66 is driven to open and close by an actuator 68. An ignition plug 62 converts a high voltage applied from an igniter 58 via a distributor 60 to a spark, which explosively ignites and combusts the air/fuel mixture.

Operation of the engine 50 is controlled by an electronic control unit (hereinafter referred to as EFIECU) 70. The EFIECU 70 receives information from various sensors, which detect operating conditions of the engine 50. These sensors include a throttle valve position sensor 67 for detecting the position of the throttle valve 66, a manifold vacuum sensor 72 for measuring a load applied to the engine 50, a water temperature sensor 74 for measuring the temperature of cooling water in the engine 50, and a speed sensor 76 and an angle sensor 78 mounted on the distributor 60 for measuring the revolving speed and rotational angle of the crankshaft 56. A starter switch 79 for detecting a starting condition ST of an ignition key (not shown) is also connected to the EFIECU 70. Other sensors and switches connecting with the EFIECU 70 are omitted from the drawings.

The crankshaft 56 of the engine 50 is linked with a drive shaft 22 via a clutch motor 30 and an assist motor 40 (described later in detail). The drive shaft 22 further connects with a differential gear 24, which eventually transmits the torque output from the drive shaft 22 of the power output apparatus 20 to left and right driving wheels 26 and 28. The clutch motor 30 and the assist motor 40 are driven and controlled by a controller 80, which includes an internal control CPU. A gearshift position sensor 84 attached to a gearshift 82, an accelerator position sensor 65A attached to an accelerator pedal 64A, and a brake position sensor 65B attached to a brake pedal 64B are connected to the controller 80. The controller 80 sends and receives a variety of data and information to and from the EFIECU 70 through communication. Details of the control procedure including a communication protocol will be described later.

Referring to Fig. 1, the power output apparatus 20 essentially includes the engine 50, the clutch motor 30 with an outer rotor 32 and an inner rotor 34, the assist motor 40 with a rotor 42, and the controller 80 for driving and controlling the clutch motor 30 and the assist motor 40. The outer rotor 32 of the clutch motor 30 is mechanically connected to the crankshaft 56 of the engine 50, whereas the inner rotor 34 thereof is mechanically linked with the rotor 42 of the assist motor 40.

As shown in Fig. 1, the clutch motor 30 is constructed as a synchronous motor having permanent magnets 35 attached to an inner surface of the outer rotor 32 and three-phase coils 36 wound on slots formed in the inner rotor 34. Power is supplied to the three-phase coils 36 via a rotary transformer 38. A thin laminated sheet of non-directional electromagnetic steel is used to form teeth and slots for the three-phase coils 36 in the inner rotor 34. A resolver 39 for measuring a rotational angle $\theta e$ of the crankshaft 56 is attached on the crankshaft 56. The resolver 39 may also serve as the angle sensor 78 mounted on the distributor 60.

The assist motor 40 is also constructed as a synchronous motor having three-phase coils 44, which are wound on a stator 43 fixed to a casing 45 to generate a rotating magnetic field. The stator 43 is also made of a thin laminated sheet of non-directional electromagnetic steel. A plurality of permanent magnets 46 are attached to an outer surface of the rotor 42. In the assist motor 40, interaction between a magnetic field formed by the permanent magnets 46 and a rotating magnetic field formed by the three-phase coils 44 leads to rotation of the rotor 42. The rotor 42 is mechanically linked with the drive shaft 22 working as the torque output shaft of the power output apparatus 20. A resolver 48 for measuring a rotational angle $\theta d$ of the drive shaft 22 is attached to the drive shaft 22, which is further supported by a bearing 49 held in the casing 45.

The inner rotor 34 of the clutch motor 30 is mechanically linked with the rotor 42 of the assist motor 40 and further with the drive shaft 22. When the rotation and axial torque of the crankshaft 56 of the engine 50 are transmitted via the outer rotor 32 to the inner rotor 34 of the clutch motor 30, the rotation and torque by the assist motor 40 are added to or subtracted from the transmitted rotation and torque.

While the assist motor 40 is constructed as a conventional permanent magnet-type three-phase synchronous motor, the clutch motor 30 includes two rotating elements or rotors, that is, the outer rotor 32 with the permanent magnets 35 and the inner rotor 34 with the three-phase coils 36. The detailed structure of the clutch motor 30 is described with the cross sectional view of Fig. 2. The outer rotor 32 of the clutch motor 30 is attached to a circumferential end of a wheel 57 set around the crankshaft 56, by means of a pressure pin 59a and a screw 59b. A central portion of the wheel 57 is protruded to form a shaft-like element, to which the inner rotor 34 is rotatably attached by means of bearings 37A and 37B. One end of the drive shaft 22 is fixed to the inner rotor 34.

A plurality of permanent magnets 35, four in this embodiment, are attached to the inner surface of the outer rotor 32 as mentioned previously. The permanent magnets 35 are magnetized in the direction towards the axial center of the clutch motor 30, and have magnetic poles of alternately inverted directions. The three-phase coils 36 of the inner rotor 34 facing to the permanent magnets 35 across a little gap are wound on a total of 24 slots (not shown) formed in the inner rotor 34. Supply of electricity to the respective coils forms magnetic fluxes running through the teeth (not shown), which separate the slots from one another. Supply of a three-phase alternating current to the respective coils rotates this magnetic field. The three-phase coils 36 are connected to receive electric power supplied from the rotary transformer 38. The rotary transformer 38 includes primary windings 38a fixed to the casing 45 and secondary windings 38b attached to the drive shaft 22 coupled with the inner rotor 34. Electromagnetic induction allows electric power to be transmitted from the primary windings 38a to the secondary windings 38b or vice versa. The rotary transformer 38 has windings for three phases, that is, U, V, and W phases, to enable the transmission of three-phase electric currents.

Interaction between a magnetic field formed by one adjacent pair of permanent magnets 35 and a rotating magnetic field formed by the three-phase coils 36 of the inner rotor 34 leads to a variety of behaviors of the outer rotor 32 and the inner rotor 34. The frequency of the three-phase alternating current supplied to the three-phase coils 36 is generally equal to a difference between the revolving speed (revolutions per second) of the outer rotor 32 directly connected to the crankshaft 56 and the revolving speed of the inner rotor 34. This results in a slip between the rotations of the outer rotor 32 and the inner rotor 34. Details of the control procedures of the clutch motor 30 and the assist motor 40 will be described later based on the flowcharts.

As mentioned above, the clutch motor 30 and the assist motor 40 are driven and controlled by the controller 80. Referring back to Fig. 1, the controller 80 includes a first driving circuit 91 for driving the clutch motor 30, a second driving circuit 92 for driving the assist motor 40, a control CPU 90 for controlling both the first and second driving circuits 91 and 92, and a battery 94 including a number of secondary cells. The control CPU 90 is a one-chip microprocessor including a RAM 90a used as a working memory, a ROM 90b in which various control programs are stored, an input/output port (not shown), and a serial communication port (not shown) through which data are sent to and received from the EFIECU 70. The control CPU 90 receives a variety of data through the input/output port. The input data include a rotational angle $\theta e$ of the crankshaft 56 of the engine 50 from the resolver 39, a rotational angle $\theta d$ of the drive shaft 22 from the resolver 48, an accelerator pedal position AP (pressing amount of the accelerator pedal 64A) from the accelerator position sensor 65A, a brake pedal position BP (pressing amount of the brake pedal 64B) from the brake position sensor 65B, a gearshift position SP from the gearshift position sensor 84, clutch motor currents Iuc and Ivc from two ammeters 95 and 96 in the first driving circuit 91, assist motor currents Iua and Iva from two ammeters 97 and 98 in the second driving circuit 92, and a residual capacity BRM of the battery 94 from a residual capacity meter 99. The residual capacity meter 99 may determine the residual capacity BRM of the battery 94 by any known method; for example, by measuring the specific gravity of an electrolytic solution in the battery 94 or the whole weight of the battery 94, by computing the currents and time of charge and discharge, or by causing an instantaneous short-circuit between terminals of the battery 94 and measuring an internal resistance against the electric current.

The control CPU 90 outputs a first control signal SW1 for driving six transistors Tr1 through Tr6 working as switching elements of the first driving circuit 91 and a second control signal SW2 for driving six transistors Tr11 through Tr16 working as switching elements of the second driving circuit 92. The six transistors Tr1 through Tr6 in the first driving circuit 91 constitute a transistor inverter and are arranged in pairs to work as a source and a drain with respect to a pair of power lines P1 and P2. The three-phase coils (U,V,W) 36 of the clutch motor 30 are connected via the rotary transformer 38 to the respective contacts of the paired transistors. The power lines P1 and P2 are respectively connected to plus and minus terminals of the battery 94. The first control signal SW1 output from the control CPU 90 successively controls the power-on time of the paired transistors Tr1 through Tr6. The electric current flowing through each coil 36 undergoes PWM (pulse width modulation) to give a quasi-sine wave, which enables the three-phase coils 36 to form a rotating magnetic field.

The six transistors Tr11 through Tr16 in the second driving circuit 92 also constitute a transistor inverter and are arranged in the same manner as the transistors Tr1 through Tr6 in the first driving circuit 91. The three-phase coils (U,V,W) 44 of the assist motor 40 are connected to the respective contacts of the paired transistors. The second control signal SW2 output from the control CPU 90 successively controls the power-on time of the paired transistors Tr11 through Tr16. The electric current flowing through each coil 44 undergoes PWM to give a quasi-sine wave, which enables the three-phase coils 44 to form a rotating magnetic field.

The power output apparatus 20 thus constructed works in accordance with the operation principles described below, especially with the principle of torque conversion. By way of example, it is assumed that the engine 50 driven by the EFIECU 70 rotates at a revolving speed Ne equal to a predetermined value N1. While the transistors Tr1 through Tr6 in the first driving circuit 91 are in OFF position, the controller 80 does not supply any current to the three-phase coils 36 of the clutch motor 30 via the rotary transformer 38. No supply of electric current causes the outer rotor 32 of the clutch motor 30 to be electromagnetically disconnected from the inner rotor 34. This results in racing the crankshaft 56 of the engine 50. Under the condition that all the transistors Tr1 through Tr6 are in OFF position, there is no regeneration of energy from the three-phase coils 36, and the engine 50 is kept at an idle.

As the control CPU 90 of the controller 80 outputs the first control signal SW1 to control on and off the transistors Tr1 through Tr6 in the first driving circuit 91, a constant electric current is flown through the three-phase coils 36 of the clutch motor 30, based on the difference between the revolving speed Ne of the crankshaft 56 of the engine 50 and a revolving speed Nd of the drive shaft 22 (that is, difference Nc (=Ne-Nd) between the revolving speed of the outer rotor 32 and that of the inner rotor 34 in the clutch motor 30). A certain slip accordingly exists between the outer rotor 32 and the inner rotor 34 connected with each other in the clutch motor 30. At this moment, the inner rotor 34 rotates at the revolving speed Nd, which is lower than the revolving speed Ne of the crankshaft 56 of the engine 50. In this state, the clutch motor 30 functions as a generator and carries out the regenerative operation to regenerate an electric current via the first driving circuit 91. In order to allow the assist motor 40 to consume energy identical with the electrical energy regenerated by the clutch motor 30, the control CPU 90 controls on and off the transistors Tr11 through Tr16 in the second driving circuit 92. The on-off control of the transistors Tr11 through Tr16 enables an electric current to flow through the three-phase coils 44 of the assist motor 40, and the assist motor 40 consequently carries out the power operation to produce a torque.

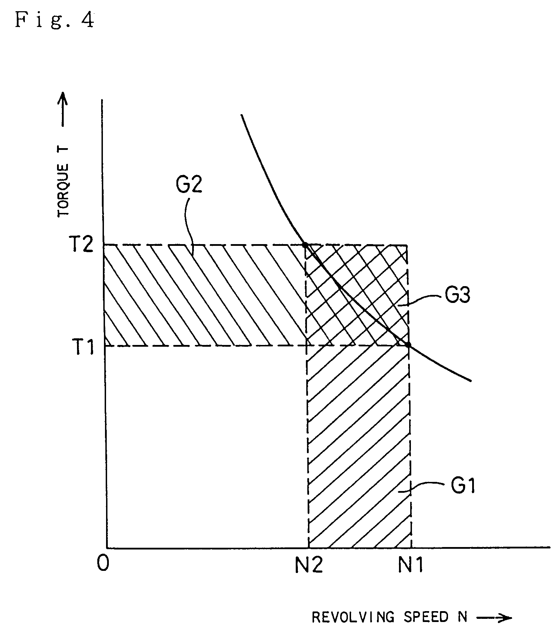

Referring to Fig. 4, while the crankshaft 56 of the engine 50 is driven at a revolving speed N1 and a torque T1, energy in a region G1 is regenerated as electric power by the clutch motor 30. The regenerated power is supplied to the assist motor 40 and converted to energy in a region G2, which enables the drive shaft 22 to rotate at a revolving speed N2 and a torque T2. The torque conversion is carried out in the manner discussed above, and the energy corresponding to the slip in the clutch motor 30 or the revolving speed difference Nc (=Ne-Nd) is consequently given as a torque to the drive shaft 22.

In another example, it is assumed that the engine 50 is driven at a revolving speed Ne=N2 and a torque Te=T2, whereas the drive shaft 22 is rotated at the revolving speed N1, which is greater than the revolving speed N2. In this state, the inner rotor 34 of the clutch motor 30 rotates relative to the outer rotor 32 in the direction of rotation of the drive shaft 22 at a revolving speed defined by the absolute value of the revolving speed difference Nc (=Ne-Nd). While functioning as a normal motor, the clutch motor 30 consumes electric power to apply the energy of rotational motion to the drive shaft 22. When the control CPU 90 of the controller 80 controls the second driving circuit 92 to enable the assist motor 40 to regenerate electrical energy, a slip between the rotor 42 and the stator 43 of the assist motor 40 makes the regenerative current flow through the three-phase coils 44. In order to allow the clutch motor 30 to consume the energy regenerated by the assist motor 40, the control CPU 90 controls both the first driving circuit 91 and the second driving circuit 92. This enables the clutch motor 30 to be driven without using any electric power stored in the battery 94.

Referring back to Fig. 4, when the crankshaft 56 of the engine 50 is driven at the revolving speed N2 and the torque T2, energy in the sum of regions G2 and G3 is regenerated as electric power by the assist motor 40 and supplied to the clutch motor 30. Supply of the regenerated power enables the drive shaft 22 to rotate at the revolving speed N1 and the torque T1.

Other than the torque conversion and revolving speed conversion discussed above, the power output apparatus 20 of the embodiment can charge the battery 94 with an excess of electrical energy or discharge the battery 94 to supplement the electrical energy. This is implemented by controlling the mechanical energy output from the engine 50 (that is, the product of the torque Te and the revolving speed Ne), the electrical energy regenerated or consumed by the clutch motor 30, and the electrical energy regenerated or consumed by the assist motor 40. The output energy from the engine 50 can thus be transmitted as power to the drive shaft 22 at a higher efficiency.

The following describes different processes of braking a vehicle, which receives power of the engine 50 transmitted by the torque conversion described above and is kept in a driving state. Braking may be accomplished via the clutch motor 30, via the assist motor 40, or via both the clutch motor 30 and the assist motor 40. Braking via the assist motor 40 follows a known procedure, wherein the assist motor 40 functions as a generator and the battery 94 is charged with the electrical energy which is converted from the energy of rotational motion (kinetic energy) of the drive shaft 22. The processes of braking via the clutch motor 30 and via both the clutch motor 30 and the assist motor 40 are described in detail below. Braking accomplished via both the clutch motor 30 and the assist motor 40 is a combination of the braking via the clutch motor 30 described below and the known braking procedure via the assist motor 40 described above.

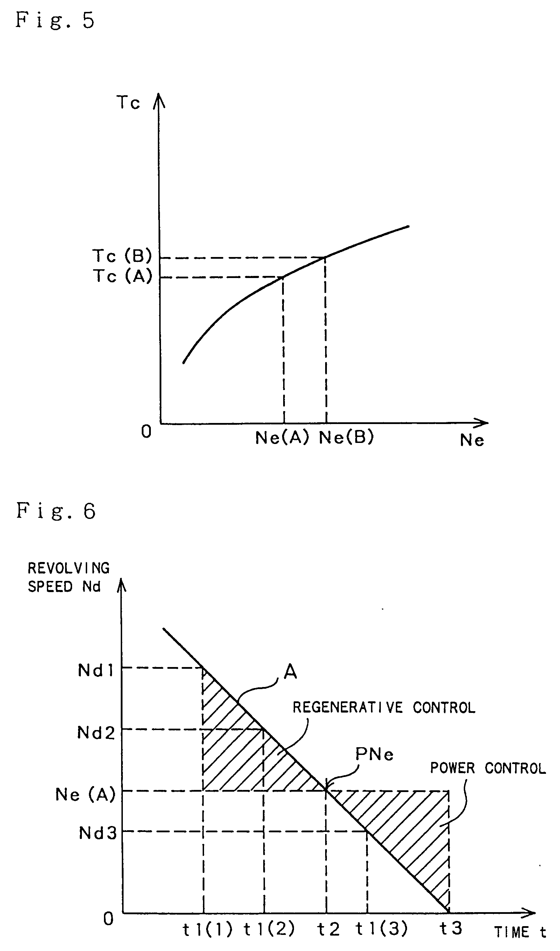

The clutch motor 30 applies a torque acting in the direction reverse to the rotating direction of the drive shaft 22 onto the drive shaft 22 for the purpose of braking. It is assumed that the drive shaft 22 rotates in a positive direction for moving the vehicle forward and that a torque Tc in a negative direction, reverse to the rotating direction of the drive shaft 22, is applied to the drive shaft 22 by the clutch motor 30. A torque Tc in a positive direction, which has the same scalar as the torque Tc applied to the drive shaft 22 but acts in the reverse direction, is then applied to the crankshaft 56 via the outer rotor 32, thereby racing the engine 50. When fuel injection is stopped under such condition, the engine 50 rotates at the revolving speed to make the force required for friction and compression of the piston thereof balance with the torque Tc in the positive direction acting as the external force. The graph of Fig. 5 shows the relationship between the torque Tc acting as the external force and the revolving speed Ne of the engine 50 under the condition of ceased fuel injection. The engine 50 rotates at a revolving speed Ne(A) against the torque Tc (external force) equal to a value Tc(A) and at another revolving speed Ne(B) against the torque Tc equal to another value Tc(B).

The clutch motor 30 drives and rotates the inner rotor 34 connecting with the drive shaft 22 relative to the outer rotor 32 which is connected to the crankshaft 56 rotating at the revolving speed Ne of the engine 50. The revolving speed of the clutch motor 30 is accordingly equal to the difference Nc (=Ne-Nd) between the revolving speed Ne of the engine 50 and the revolving speed Nd of the drive shaft 22. It is defined that the clutch motor 30 rotates in a positive direction when the inner rotor 34 rotates in a positive direction (that is, the direction of normal rotation of the drive shaft 22) relative to the outer rotor 32, or in other words, when the revolving speed Ne of the engine 50 is less than the revolving speed Nd of the drive shaft 22 (that is, the revolving speed difference Nc is a negative value). The torque Tc in the negative direction applied to the drive shaft 22 by the clutch motor 30 rotating in the positive direction accordingly decreases the rate of relative rotation of the clutch motor 30 in the positive direction, thereby attaining the regenerative control of the clutch motor 30. In the description hereafter, the braking under such condition is referred to as 'braking by the regenerative control of the clutch motor 30'.

When the clutch motor 30 rotates in a negative direction, that is, when the revolving speed Ne of the engine 50 is greater than the revolving speed Nd of the drive shaft 22, on the contrary, the torque Tc in the negative direction applied to the drive shaft 22 by the clutch motor 30 increases the rate of relative rotation in the negative direction, thereby attaining the power control of the clutch motor 30. In the description hereafter, the braking under such condition is referred to as 'braking by the power control of the clutch motor 30'.

Fig. 6 is a graph showing the revolving speed Nd of the drive shaft 22 plotted against the time t (plane curve A) and the state of the clutch motor 30 when the negative value Tc(A) is set to the torque Tc of the clutch motor 30. The plane curve A represents a variation in revolving speed Nd of the drive shaft 22 when the torque Tc (= the value Tc(A)) in the negative direction is applied onto the drive shaft 22 by the clutch motor 30. When the torque Tc (=Tc(A)) in the negative direction is set in the clutch motor 30, the revolving speed Ne of the engine 50 becomes equal to the value Ne(A) corresponding to the torque Tc acting as the external force, as described previously with the graph of Fig. 5. The application of the torque Tc in the negative direction from the clutch motor 30 to the drive shaft 22 effects the following braking procedures according to the position on the plane curve A depending upon the revolving speed Nd of the drive shaft 22. When the revolving speed Nd of the drive shaft 22 is greater than the value Ne(A), that is, in a left upper region (left side of a time point t2) across a point PNe, which is an intersection of the plane curve A and a broken line Nd=Ne(A), the clutch motor 30 rotates in the positive direction and executes braking by the regenerative control. When the revolving speed Nd of the drive shaft 22 is less than the value Ne(A), that is, in a right lower region (right side of the time point t2) across the point PNe, the clutch motor 30 rotates in the negative direction and executes braking by the power control.

In a concrete procedure, both the regenerative control and the power control of the clutch motor 30 are carried out by controlling the transistors Tr1 through Tr6 of the first driving circuit 91 to consistently generate the torque Tc in the negative direction. The transistors Tr1 through Tr6 are controlled by the permanent magnets 35 attached to the outer rotor 32 and the rotating magnetic field generated by the currents passing through the three-phase coils 36 of the inner rotor 34. The same switching operation of the transistors Tr1 through Tr6 is accordingly executed for both the regenerative control and the power control. While the value of the torque Tc in the negative direction applied from the clutch motor 30 to the drive shaft 22 is kept constant, a change of the braking operation of the clutch motor 30 from the regenerative control to the power control does not vary the switching operation of the transistors Tr1 through Tr6 in the first driving circuit 91.

When the revolving speed Nd of the drive shaft 22 is equal to a first value Nd1 (at a time point t1(1)) or a second value Nd2 (at a time point t1(2)), which is greater than the value Ne(A), the clutch motor 30 functions as a generator and executes the regenerative control, in response to the negative torque Tc(A) set as the torque Tc of the clutch motor 30 by a step-on operation of the brake pedal 64B. The clutch motor 30 executes the power control after the revolving speed Nd of the drive shaft 22 becomes coincident with the value Ne(A) (after the point PNe). When the revolving speed Nd of the drive shaft 22 is equal to a third value Nd3 (at a time point t1(3)), which is less than the value Ne(A), in response to the negative torque Tc(A) set as the torque Tc of the clutch motor 30 by a step-on operation of the brake pedal 64B, the clutch motor 30 does not execute the regenerative control but immediately starts the power control since the braking start position is after the time point t2.

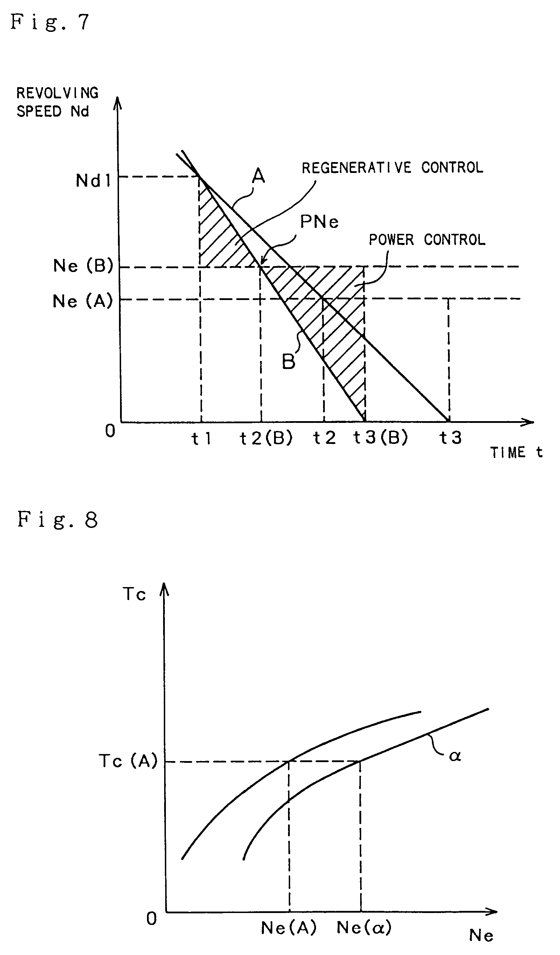

When the negative torque Tc(B) having a greater modulus than the negative torque Tc(A) is set as the torque Tc of the clutch motor 30 for braking, the revolving speed Nd of the drive shaft 22 varies along a plane curve B having a greater modulus of slope than the plane curve A as shown in the graph of Fig. 7. Under such condition, the engine 50 rotates at the revolving speed Ne(B) as shown in Fig. 5. The point PNe for switching the braking operation of the clutch motor 30 from the regenerative control to the power control is equal to an intersection of the plane curve B and a broken line Nd=Ne(B) at a time point t2(B).

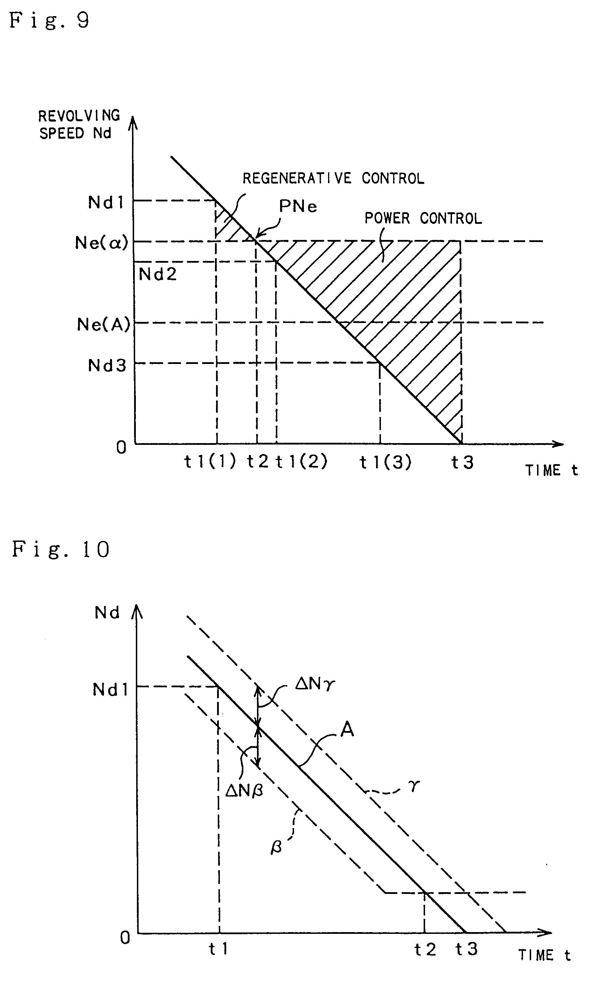

In the description above, when a negative value is set to the torque Tc of the clutch motor 30, a cease of fuel injection into the engine 50 allows the revolving speed Ne of the engine 50 to be determined according to the torque Tc of the clutch motor 30 as illustrated in Fig. 5. An alternative structure controls fuel injection into the engine 50 to set the revolving speed Ne of the engine 50 equal to a desired value, which is not less than a specific engine speed determined by the torque Tc of the clutch motor 30. As described previously with reference to Fig. 5, when the negative value Tc(A) is set to the torque Tc of the clutch motor 30, a cease of fuel injection into the engine 50 allows the engine 50 to rotate at the revolving speed Ne(A). Control of fuel injection into the engine 50, on the other hand, allows the engine 50 to rotate at a revolving speed Ne(α) on a curve α shown in the graph of Fig. 8, which illustrates the relationship between the torque Tc working as the external force and the revolving speed Ne of the engine 50 under the condition of injecting a given amount of fuel. Referring to Fig. 9, the increase in revolving speed Ne of the engine 50 from the value Ne(A) to the value Ne(α) shifts the point PNe to an upper left position, at which the revolving speed Nd of the drive shaft 22 coincides with the revolving speed Ne of the engine 50. This narrows the range of braking by the regenerative control of the clutch motor 30, while widening the range of braking by the power control of the clutch motor 30.

Controlling the revolving speed Ne of the engine 50 in this manner can shift the braking start position after the time point t2 as shown in Fig. 9, even when braking starts at the revolving speed Nd2 of the drive shaft 22, which is in the range of regenerative control of the clutch motor 30 under the condition of ceased fuel injection into the engine 50. The clutch motor 30 thus does not execute the regenerative control but immediately starts braking by the power control. This ensures the effective braking via the clutch motor 30 even when the battery 94 has a large residual capacity BRM representing a substantially fully charged state.

The control procedure above keeps the revolving speed Ne of the engine 50 constant from the start to the end of braking. The graph of Fig. 10 shows another procedure, which controls the revolving speed Ne of the engine 50 according to the revolving speed Nd of the drive shaft 22 to make the revolving speed Ne of the engine 50 consistently smaller than the revolving speed Nd of the drive shaft 22 by a predetermined value ΔNβ. Such control allows the revolving speed Ne of the engine 50 to vary on a broken line β and realizes braking by the regenerative control of the clutch motor 30 in the most range of braking. The revolving speed Ne of the engine 50 may be controlled according to the revolving speed Nd of the drive shaft 22, on the other hand, to be made consistently greater than the revolving speed Nd of the drive shaft 22 by a predetermined value $\Delta N\gamma$. Such control allows the revolving speed Ne of the engine 50 to vary on a broken line $\gamma$ and realizes braking by the power control of the clutch motor 30 in all the range of braking. Description of the control in Fig. 10 is based on the plane curve A representing the variation in revolving speed Nd of the drive shaft 22 with time under the condition of a fixed torque Tc acting on the drive shaft 22. In the actual procedure, however, as the torque Tc varies, the variation in revolving speed Nd of the drive shaft 22 may not follow the plane curve A.

In accordance with one preferable structure, after the revolving speed Nd of the drive shaft 22 becomes coincident with the revolving speed Ne of the engine 50, a constant current may be supplied through the clutch motor 30 to electromagnetically lock the outer rotor 32 and the inner rotor 34, thus stopping or restricting fuel injection into the engine 50. This structure effects the braking via the engine 50, that is, controls the drive shaft 22 by engine brake.

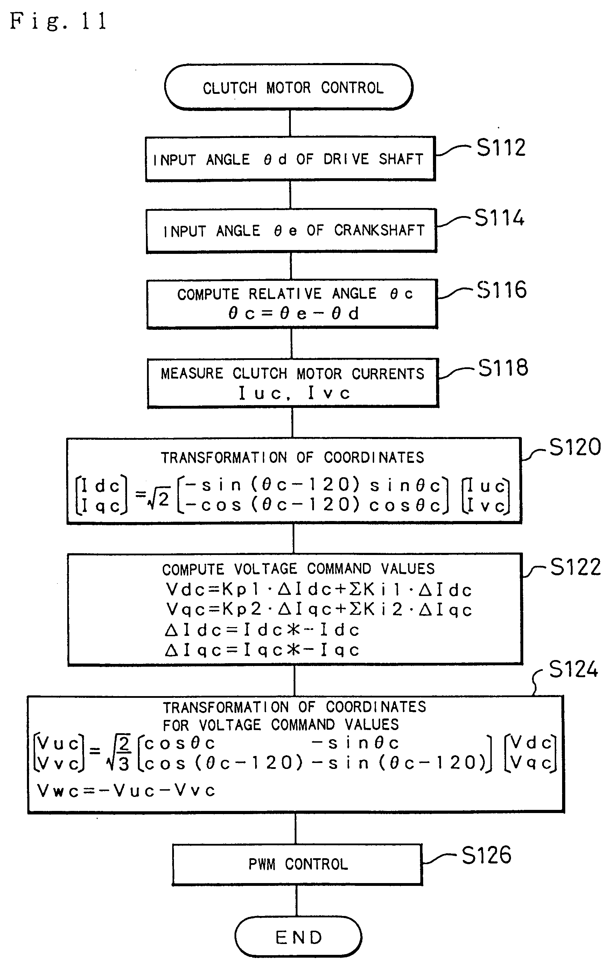

Concrete steps of controlling the clutch motor 30 for braking are described with the flowchart of clutch motor control routine shown in Fig. 11. The clutch motor control routine is repeatedly executed by the controller 80 at predetermined time intervals after a negative value is set to a torque command value Tc* of the clutch motor 30. The torque command value Tc* is determined, for example, as a value depending upon a brake pedal position BP of the brake pedal 64B detected by the brake pedal position sensor 65B.

When the program enters the clutch motor control routine, the control CPU 90 of the controller 80 first reads a rotational angle $\theta$d of the drive shaft 22 from the resolver 48 at step S112 and a rotational angle $\theta$e of the crankshaft 56 of the engine 50 from the resolver 39 at step S114. The control CPU 90 then computes a relative angle $\theta$c of the drive shaft 22 and the crankshaft 56 by the equation of $\theta c=\theta e-\theta d$ at step S116.

The program proceeds to step S118, at which the control CPU 90 receives inputs of clutch motor currents Iuc and Ivc passing through the U phase and V phase of the three-phase coils 36 in the clutch motor 30, from the ammeters 95 and 96. Although the currents naturally flow through all the three phases U, V, and W, measurement is required only for the currents passing through the two phases since the sum of the currents is equal to zero. At subsequent step S120, the control CPU 90 executes transformation of coordinates (three-phase to two-phase transformation) using the values of currents flowing through the three phases thus obtained. The transformation of coordinates maps the values of currents flowing through the three phases to the values of currents passing through d and q axes of the permanent magnet-type synchronous motor and is executed according to Equation (1) below:

$$\begin{bmatrix} Idc \\ Iqc \end{bmatrix} = \sqrt{2} \begin{bmatrix} -\sin(\theta c-120) & \sin \theta c \\ -\cos(\theta c-120) & \cos \theta c \end{bmatrix} \begin{bmatrix} Iuc \\ Ivc \end{bmatrix} \quad (1)$$

The transformation of coordinates is carried out because the values of currents flowing through the d and q axes are essential for the torque control in the permanent magnet-type synchronous motor. Alternatively, the torque control may be executed directly with the values of currents flowing through the three phases. After the transformation to the values of currents passing through the two axes, the control CPU 90 computes deviations of actual currents Idc and Iqc flowing through the d and q axes from current command values Idc* and Iqc* of the respective axes depending upon the torque command value Tc* of the clutch motor 30, and determines voltage command values Vdc and Vqc for the d and q axes at step S122. In a concrete procedure, the control CPU 90 executes operations following Equations (2) and Equations (3) given below:

$$\Delta Idc=Idc^*-Idc$$

$$\Delta Iqc=Iqc^*-Iqc \quad (2)$$

$$Vdc=Kp1 \cdot \Delta Idc+\Sigma Ki1 \cdot \Delta Idc$$

$$Vqc=Kp2 \cdot \Delta Iqc+\Sigma Ki2 \cdot \Delta Iqc \quad (3)$$

wherein Kp1, Kp2, Ki1, and Ki2 represent coefficients, which are adjusted to be suited to the characteristics of the motor applied.

The voltage command value Vdc (Vqc) includes a part in proportion to the deviation $\Delta I$ from the current command value I* (first term in right side of Equation (3)) and a summation of historical data of the deviation $\Delta I$ for 'i' times (second term in right side). The control CPU 90 then re-transforms the coordinates of the voltage command values thus obtained (two-phase to three-phase transformation) at step S124. This corresponds to an inverse of the transformation executed at step S120. The inverse transformation determines voltages Vuc, Vvc, and Vwc actually applied to the three-phase coils 36 as given below:

$$\begin{bmatrix} Vuc \\ Vvc \end{bmatrix} = \sqrt{\frac{2}{3}} \begin{bmatrix} \cos \theta c & -\sin \theta c \\ \cos(\theta c-120) & -\sin(\theta c-120) \end{bmatrix} \begin{bmatrix} Vdc \\ Vqc \end{bmatrix} \quad (4)$$

$$Vwc=-Vuc-Vvc$$

The actual voltage control is realized by on-off operation of the transistors Tr1 through Tr6 in the first driving circuit 91. At step S126, the on-time of the respective transistors Tr1 through Tr6 is PWM (pulse width modulation) controlled in order to attain the voltage command values determined by Equation (4) above.

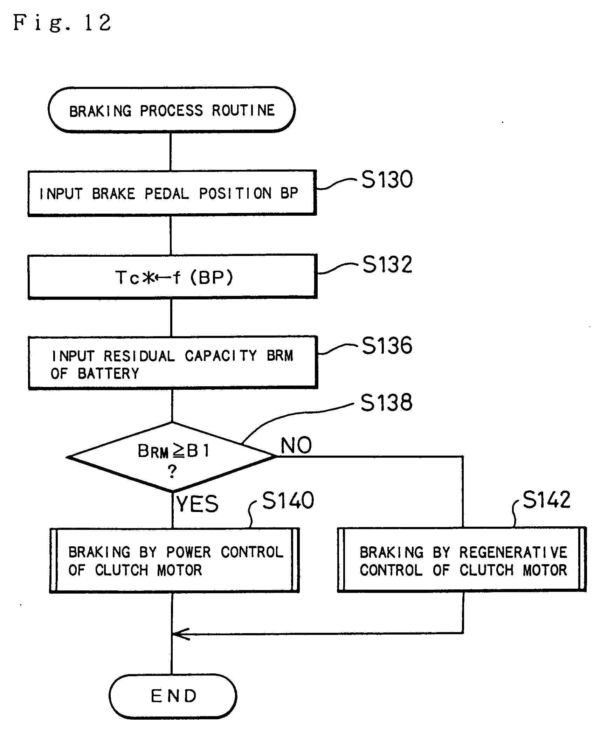

The power output apparatus 20 of the embodiment brakes the rotation of the drive shaft 22 via the clutch motor 30 as described above. Controlling the revolving speed Ne of the engine 50 effects the proper use of braking by the regenerative control of the clutch motor 30 and braking by the power control according to the requirements. The braking pattern may be varied depending upon the condition of the battery 94 as illustrated in the flowchart of braking process routine of Fig. 12.

When the program enters the braking process routine, the control CPU 90 of the controller 80 first reads a brake pedal position BP detected by the brake pedal position sensor 65B at step S130, and computes a torque command value Tc* of the clutch motor 30 generating a braking force corresponding to the input brake pedal position BP at step S132. The torque command value Tc* is previously set for each brake pedal position BP and stored in the ROM 90b. In response to an input of the brake pedal position BP, the torque command value Tc* corresponding to the brake pedal position BP is read from the ROM 90b.

The control CPU 90 then receives an input of the residual capacity BRM of the battery 94 measured by the residual capacity meter 99 at step S136, and compares the input residual capacity BRM with a threshold value B1 at step S138. The threshold value B1 represents a substantially fully charged state of the battery 94 (that is, the state not requiring any further charge) and is set depending upon the type and characteristics of the battery 94.

When the residual capacity BRM of the battery 94 is not less than the threshold value B1, the program determines that no further charging is required and goes to step S140 to execute braking by the power control of the clutch motor 30. When the residual capacity BRM of the battery 94 is less than the threshold value B1, on the other hand, the program determines that further charging is required and goes to step S142 to execute braking by the regenerative control of the clutch motor 30. As described previously, the actual braking operation by the power control of the clutch motor 30 is accomplished by making the revolving speed Ne of the engine 50 greater than the revolving speed Nd of the drive shaft 22. The braking operation by the regenerative control of the clutch motor 30 is attained by making the revolving speed Ne of the engine 50 smaller than the revolving speed Nd of the drive shaft 22. In either of the control procedures, the revolving speed Ne of the engine may be kept at a constant value, and the difference between the revolving speed Ne of the engine 50 and the revolving speed Nd of the drive shaft 22 may be kept constant or successively varied.

The braking process routine described above realizes the proper use of braking by the power control of the clutch motor 30 and braking by the regenerative control thereof based on the state of the battery 94. This effectively prevents the battery 94 from being excessively charged or completely discharged.

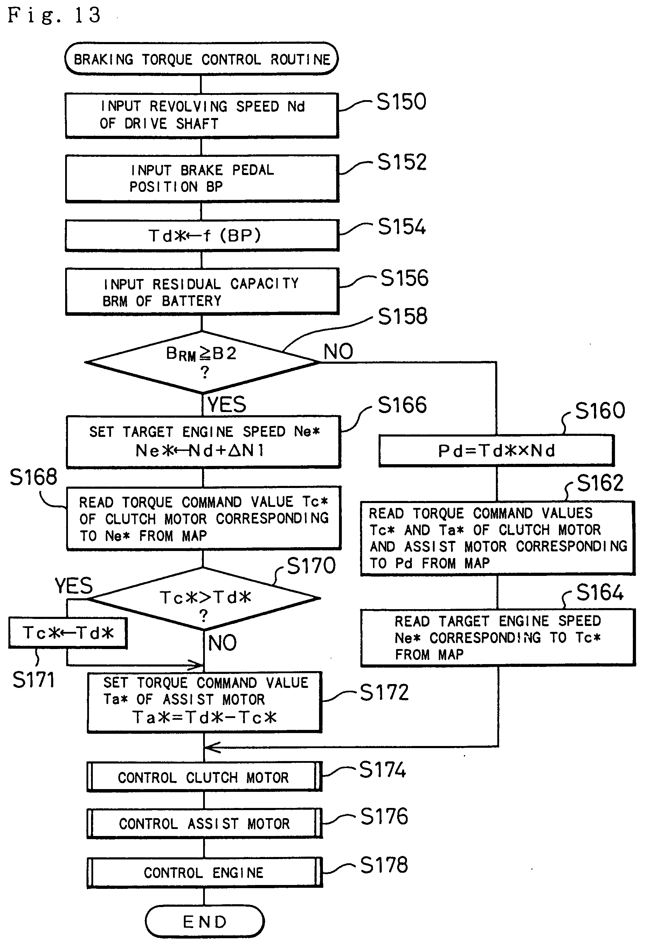

The braking operation via both the clutch motor 30 and the assist motor 40 is described with the flowchart of braking torque control routine illustrated in Fig. 13. The braking torque control routine is a combination of the series of braking patterns via the clutch motor 30 and the braking operation via the assist motor 40 as described previously. The routine is executed repeatedly at predetermined time intervals while the driver is stepping on the brake pedal 64B.

When the program enters the braking torque control routine, the control CPU 90 of the controller 80 first receives an input of the revolving speed Nd of the drive shaft 22 at step S150. The revolving speed Nd of the drive shaft 22 may be computed from the rotational angle θd of the drive shaft 22 measured by the resolver 48. The control CPU 90 then receives an input of the brake pedal position BP from the brake pedal position sensor 65B at step S152 and computes an output torque command value Td* corresponding to the input brake pedal position BP at step S154. Output torque command values Td* are previously set for the respective brake pedal positions BP and stored in the ROM 90b. In response to an input of the brake pedal position BP, the output torque command value Td* corresponding to the brake pedal position BP is read from the ROM 90b.

The control CPU 90 then receives an input of the residual capacity BRM of the battery 94 measured by the residual capacity meter 99 at step S156, and compares the input residual capacity BRM with a threshold value B2 at step S158. Like the threshold value B1, the threshold value B2 represents a substantially fully charged state of the battery 94 (that is, the state not requiring any further charge) and is set depending upon the type and characteristics of the battery 94. When the residual capacity BRM of the battery 94 is less than the threshold value B2, the program determines that the battery 94 requires further charging and goes to steps S160 through S164 to set a torque command value Tc* of the clutch motor 30, a torque command value Ta* of the assist motor 40, and a target engine speed Ne* of the engine 50. When the residual capacity BRM of the battery 94 is not less than the threshold value B2, on the other hand, the program determines that the battery 94 does not require any further charging and goes to steps S166 through S172 to set the torque command values Tc* and Ta* and the target engine speed Ne*. Detailed description of the processing for the residual capacity BRM of the battery 94 less than the threshold value B2 precedes that on the processing for the residual capacity BRM of the battery 94 not less than the threshold value B2.

When the residual capacity BRM of the battery 94 is determined to be less than the threshold value B2 at step S158, the program proceeds to step S160, at which the control CPU 90 calculates a braking energy Pd by multiplying the output torque command value Td*, which the driver requires, by the revolving speed Nd of the drive shaft 22. At subsequent step S162, the torque command value Tc* of the clutch motor 30 and the torque command value Ta* of the assist motor 40 corresponding to the calculated braking energy Pd are read from a map previously set and stored in the ROM 90b.

The map stored in the ROM 90b represents the relationship between the braking energy Pd, the torque command value Tc* of the clutch motor 30, and the torque command value Ta* of the assist motor 40. The map used in this embodiment includes experimental data of the torque command value Tc* of the clutch motor 30 and the torque command value Ta* of the assist motor 40 for most efficiently regenerating an electrical energy from the given braking energy Pd. The data in the map depend upon the types and characteristics of the clutch motor 30 and the assist motor 40 as well as the characteristics of the engine 50.

After the torque command values Tc* and Ta* of the clutch motor 30 and the assist motor 40 are set, the program goes to step S164, at which the target engine speed Ne* of the engine 50 corresponding to the torque command value Tc* of the clutch motor 30 is read from a map previously set and stored in the ROM 90b. The map used here is, for example, the graph of Fig. 5 representing the relationship between the torque Tc acting as the external force and the revolving speed Ne of the engine 50 under the condition of ceased fuel injection.

When the residual capacity BRM of the battery 94 is determined to be not less than the threshold value B2 at step S158, on the other hand, the program proceeds to step S166. For example, the repeated execution of the processing at steps S160 through S164 described above charges the battery 94 and makes the residual capacity BRM of the battery 94 equal to or greater than the threshold value B2. At step S166, the control CPU 90 calculates the target engine speed Ne* of the engine 50 by adding a predetermined deviation ΔN1 to the revolving speed Nd of the drive shaft 22. The target engine speed Ne* determined by adding the predetermined deviation ΔN1 to the revolving speed Nd is used to execute the braking operation by the power control of the clutch motor 30. The predetermined deviation ΔN1 depends upon the characteristics of the engine 50 and the clutch motor 30. Although the target engine speed Ne* is determined by adding the predetermined deviation ΔN1 to the revolving speed Nd, the predetermined deviation ΔN1 may be replaced by a variate depending upon the output torque command value Td* computed at step S154.

After the determination of the target engine speed Ne*, the torque command value Tc* of the clutch motor 30 corresponding to the target engine speed Ne* is read from a map (for example, the graph of Fig. 5) previously set and stored in the ROM 90b at step S168. The program then proceeds to step S170 at which the torque command value Tc* of the clutch motor 30 thus obtained is compared with the output torque command value Td* computed at step S154. When the torque command value Tc* is greater than the output torque command value Td*, the program goes to step S171 at which the control CPU 90 substitutes the output torque command value Td* for the torque command value Tc* in order to make the torque command value Tc* not greater than the output torque command value Td* required by the driver.

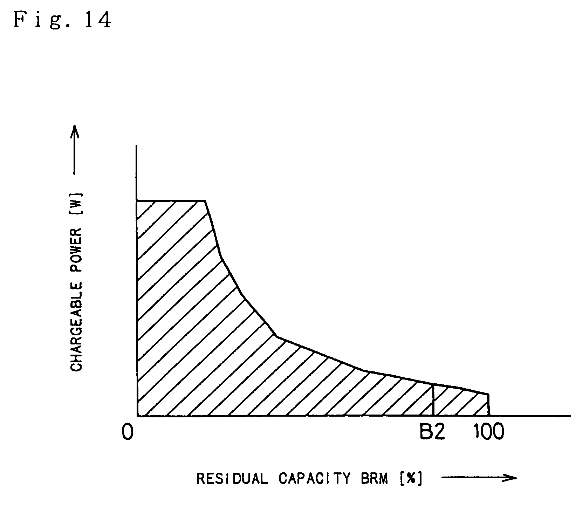

At step S172, the control CPU 90 subtracts the torque command value Tc* from the output torque command value Td* to set the torque command value Ta* of the assist motor 40. When the torque command value Tc* is determined to be greater than the output torque command value Td* at step S170, the output torque command value Td* is substituted for the torque command value Tc* at step S171. This sets the torque command value Ta* of the assist motor 40 equal to zero. When the torque command value Tc* is determined not to be greater than the output torque command value Td* at step S170, the torque command value Ta* of the assist motor 40 is not equal to zero. This enables the assist motor 40 to regenerate an electrical energy, which is consumed by the clutch motor 30. In some cases, the electrical energy regenerated by the assist motor 40 may exceed the electrical energy consumed by the clutch motor 30. The excess energy may be used for charging the battery 94. The graph of Fig. 14 shows the relationship between the residual capacity BRM and the chargeable power. Even when the residual capacity BRM is greater than the threshold value B2, the battery 94 can be charged to some extent. The capacity of the battery 94 and the threshold value B2 are selected adequately to make the electrical energy (power) regenerated by braking equal to or less than the chargeable power.

After the torque command values Tc* and Ta* of the clutch motor 30 and the assist motor 40 and the target engine speed Ne* of the engine 50 are set by the processing at steps S160 through S164 or by the processing at steps S166 through S172, the control CPU 90 executes control of the clutch motor 30 at step S174, control of the assist motor 40 at step S176, and control of the engine 50 at step S178. As a matter of convenience, the control operations of the clutch motor 30, the assist motor 40, and the engine 50 are shown as separate steps. In the actual procedure, however, these control operations are carried out concurrently. For example, the control CPU 90 simultaneously controls the clutch motor 30 and the assist motor 40 by interrupt processing, while transmitting an instruction to the EFIECU 70 through communication to concurrently control the engine 50.

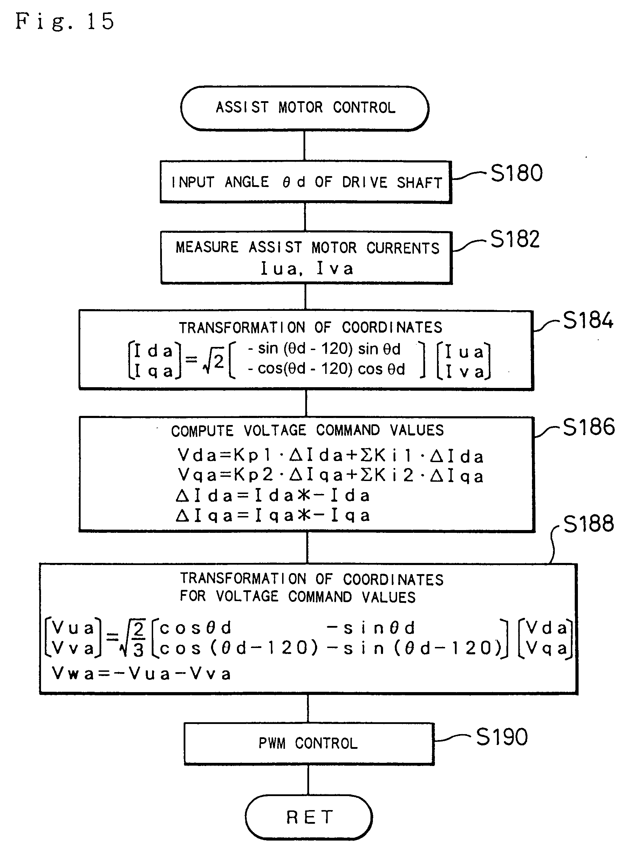

The control procedure of the clutch motor 30 executed at step S174 is identical with the clutch motor control routine shown in the flowchart of Fig. 11 and is thus not described here. The control of the assist motor 40 at step S176 follows an assist motor control routine shown in the flowchart of Fig. 15.

When the program enters the assist motor control routine, the control CPU 90 of the controller 80 first reads a rotational angle θd of the drive shaft 22 from the resolver 48 at step S180, and receives inputs of assist motor currents Iua and Iva passing through the U phase and V phase of the three-phase coils 44 in the assist motor 40, from the ammeters 97 and 98 at step S182.

The control CPU 90 then executes transformation of coordinates at step S184, computes voltage command values Vda and Vqa at step S186, and executes inverse transformation of coordinates of the voltage command values at step S188. The processing executed at steps S184 through S188 is identical with that executed at steps S120 through S124 of the clutch motor control routine shown in the flowchart of Fig. 11. At step S190, the control CPU 90 determines the on and off time of the transistors Tr11 through Tr16 in the second driving circuit 92 of the assist motor 40 for PWM (pulse width modulation) control.

For controlling the engine 50 at step S178 in the flowchart of Fig. 13, the control CPU 90 transmits an instruction to the EFIECU 70 through communication to make the revolving speed Ne of the engine 50 approach the target engine speed Ne*. Based on the instruction, the EFIECU 70 increases or decreases the amount of fuel injection or the throttle valve position. In the braking torque control routine of Fig. 13, the target engine speed Ne* (step S164) and the torque command value Tc* (step S168) are read from the graph of Fig. 5 representing the relationship between the torque Tc acting as the external force and the revolving speed Ne of the engine 50 under the condition of ceased fuel injection. Unless the torque command value Tc* is changed at step S171, the EFIECU 70 fully closes the throttle valve 66 simultaneously with a cease of fuel injection and further stops spark ignition, so that the revolving speed Ne of the engine 50 becomes equal to the target engine speed Ne*. When the torque command value Tc* is changed to the smaller value at step S171, on the other hand, the revolving speed Ne of the engine 50 corresponding to the decreased torque command value Tc* in the graph of Fig. 5 becomes less than the target engine speed Ne*. The EFIECU 70 accordingly regulates the amount of fuel injection and the throttle valve position for controlling the engine 50. In this embodiment, the target engine speed Ne* is kept unchanged while the torque command value Tc* is corrected to the smaller value. In accordance with an alternative structure, in response to the decrease in torque command value Tc*, a new value may be set for the target engine speed Ne* based on the map of Fig. 5. In the latter case, the control of the engine 50 is always practiced by fully closing the throttle valve 66 simultaneously with a cease of fuel injection and stopping spark ignition.

The braking torque control routine described above realizes braking of the drive shaft 22 via both the clutch motor 30 and the assist motor 40, based on the state of the residual capacity BRM of the battery 94. When the residual capacity BRM of the battery 94 is less than the threshold value B2, the braking energy Pd is efficiently regenerated to charge the battery 94. This desirably enhances the energy efficiency. When the residual capacity BRM of the battery 94 is not less than the threshold value B2, on the contrary, braking by the power control of the clutch motor 30 effectively prevents the battery 94 from being excessively charged.

In the embodiment, the clutch motor 30 and the assist motor 40 are used for braking the drive shaft 22. The vehicle may further be provided with a braking mechanism for braking the drive shaft 22 by means of a mechanical frictional force. In this alternative structure, braking by the braking mechanism can be combined with braking via the clutch motor 30 and the assist motor 40. This increases the combinations of braking operation and effectively copes with abrupt braking.

In the structure of the embodiment, when the residual capacity BRM of the battery 94 is not less than the threshold value B2, the target engine speed Ne* is determined by adding the deviation ΔN1 to the revolving speed Nd of the drive shaft 22. The torque command value Tc* of the clutch motor 30 is then set corresponding to the computed target revolving speed Nd. An alternative structure sets the torque command value Tc* of the clutch motor 30, the torque command value Ta* of the assist motor 40, and the target engine speed Ne* to make the electrical energy consumed by the clutch motor 30 coincident with the electrical energy regenerated by the assist motor 40. For example, experimental data of the torque command values Tc* and Ta* of the clutch motor 30 and the assist motor 40 and the target engine speed Ne* to make the electrical energy consumed by the clutch motor 30 coincident with the electrical energy regenerated by the assist motor 40 are obtained against the output torque command value Td* and the revolving speed Nd of the drive shaft 22. A map including the experimental data is stored in the ROM 90b. This map is used to determine the torque command values Tc* and Ta* of the clutch motor 30 and the assist motor 40 and the target engine speed Ne* corresponding to the output torque command value Td* computed at step S154 and the revolving speed Nd of the drive shaft 22 input at step S150. This structure allows all the electrical energy regenerated by the assist motor 40 to be consumed by the clutch motor 30, thus preventing the battery 94 from being excessively charged.

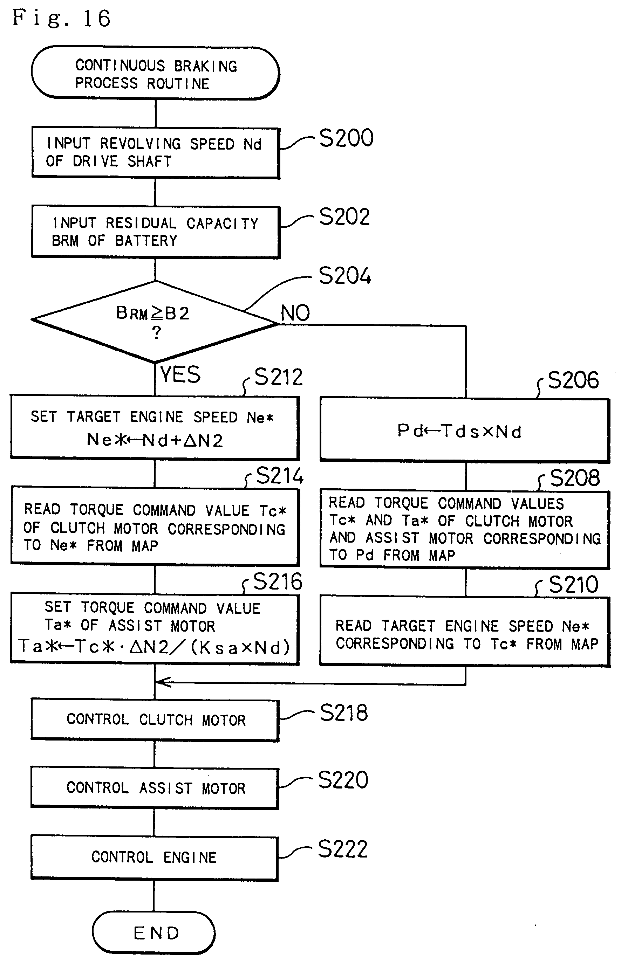

The flowchart of Fig. 16 shows a continuous braking process routine executed to continuously apply the braking force to the drive shaft 22, for example, when the vehicle with the power output apparatus 20 of the embodiment mounted thereon runs on a long downhill road. This routine is repeatedly executed at predetermined time intervals when the driver does not step on either the accelerator pedal 64A or the brake pedal 64B or gives an instruction to activate an engine brake while the vehicle is in the running condition.

When the program enters the continuous braking process routine, the control CPU 90 of the controller 80 first reads the revolving speed Nd of the drive shaft 22 at step S200 and receives an input of the residual capacity BRM of the battery 94 measured by the residual capacity meter 99 at step S202. The input residual capacity BRM is compared with a threshold value B2 at step S204. The threshold value B2 used here is identical with the threshold value B2 used at step S158 in the flowchart of braking torque control routine shown in Fig.

13. When the residual capacity BRM of the battery 94 is less than the threshold value B2, the program determines that the battery 94 requires further charging and goes to steps S206 through S210 to set the torque command value Tc* of the clutch motor 30, the torque command value Ta* of the assist motor 40, and the target engine speed Ne* of the engine 50. When the residual capacity BRM of the battery 94 is not less than the threshold value B2, on the other hand, the program determines that the battery 94 does not require any further charging and goes to steps S212 through S216 to set the torque command values Tc* and Ta* and the target engine speed Ne*. Detailed description of the processing for the residual capacity BRM of the battery 94 less than the threshold value B2 precedes that on the processing for the residual capacity BRM of the battery 94 not less than the threshold value B2.

When the residual capacity BRM of the battery 94 is determined to be less than the threshold value B2 at step S204, the program proceeds to step S206, at which the control CPU 90 computes a braking energy Pd by multiplying a continuous braking torque Tds by the revolving speed Nd of the drive shaft 22. The continuous braking torque Tds is set as a braking torque applied onto the drive shaft 22 when neither the accelerator pedal 64A nor the brake pedal 64B is stepped on. On the assumption that the continuous braking torque Tds is constant, the braking energy Pd is proportional to the revolving speed Nd of the drive shaft 22.

At subsequent step S208, the torque command value Tc* of the clutch motor 30 and the torque command value Ta* of the assist motor 40 corresponding to the computed braking energy Pd are read from a map previously set and stored in the ROM 90b. The map stored in the ROM 90b represents the relationship between the braking energy Pd, the torque command value Tc* of the clutch motor 30, and the torque command value Ta* of the assist motor 40, and is identical with the map used at step S162 in the flowchart of braking torque control routine shown in Fig. 13. Namely, the map used here includes experimental data of the torque command value Tc* of the clutch motor 30 and the torque command value Ta* of the assist motor 40 for most efficiently regenerating an electrical energy from the given braking energy Pd. The program then goes to step S210, at which the target engine speed Ne* of the engine 50 corresponding to the torque command value Tc* of the clutch motor 30 is read from a map (for example, the graph of Fig. 5) previously set and stored in the ROM 90b.

When the residual capacity BRM of the battery 94 is determined to be not less than the threshold value B2 at step S204, on the other hand, the program proceeds to step S212. For example, the repeated execution of the processing at steps S206 through S210 described above charges the battery 94 and makes the residual capacity BRM of the battery 94 equal to or greater than the threshold value B2. At step S204, the control CPU 90 calculates the target engine speed Ne* of the engine 50 by adding a predetermined deviation ΔN2 to the revolving speed Nd of the drive shaft 22. The target engine speed Ne* determined by adding the predetermined deviation ΔN2 to the revolving speed Nd is used to execute the braking operation by the power control of the clutch motor 30. The predetermined deviation ΔN2 depends upon the characteristics of the engine 50 and the clutch motor 30, and is determined to make the total of the torque command value Tc* and the torque command value Ta* set at steps S214 and S216 substantially equivalent to the continuous braking torque Tds used at step S206. Although the target engine speed Ne* is determined by adding the predetermined deviation ΔN2 to the revolving speed Nd, the predetermined deviation ΔN2 may be replaced by a variate depending upon the revolving speed Nd of the drive shaft 22 read at step S200.

After the determination of the target engine speed Ne*, the program proceeds to step S214, at which the control CPU 90 reads the torque command value Tc* of the clutch motor 30 corresponding to the target engine speed Ne* from a map (for example, the graph of Fig. 5) previously set and stored in the ROM 90b. At subsequent step S216, the control CPU 90 computes the torque command value Ta* of the assist motor 40 according to Equation (5) given below:

$$Ta^* = Tc^* \times \Delta N2 / (Ksa \times Nd) \qquad (5)$$

wherein Ksa represents an efficiency of regeneration by the assist motor 40.

It is reasonably assumed that the clutch motor 30 rotates at the revolving speed difference Nc (= deviation ΔN2 in this routine) between the revolving speed Ne of the engine 50 and the revolving speed Nd of the drive shaft 22. The product of the torque command value Tc* and the deviation ΔN2 accordingly represents the electrical energy consumed by the clutch motor 30. The result obtained by multiplying the product of the torque command value Ta* and the revolving speed Nd of the drive shaft 22 by the efficiency Ksa corresponds to the electrical energy regenerated by the assist motor 40. The above Equation (5) thus gives the torque command value Ta* on the assumption that the electrical energy consumed by the clutch motor 30 coincides with the electrical energy regenerated by the assist motor 40. The control with the torque command values Tc* and Ta* and the target engine speed Ne* set at steps S212 through S216 allows the clutch motor 30 to be driven with the power regenerated by the assist motor 40. This structure enables the drive shaft 22 to be continuously braked via the clutch motor 30 and the assist motor 40 without charging the battery 94.

After the torque command values Tc* and Ta* of the clutch motor 30 and the assist motor 40 and the target engine speed Ne* of the engine 50 are set by the processing at steps S206 through S210 or by the processing at steps S212 through S216, the control CPU 90 executes control of the clutch motor 30 at step S218, control of the assist motor 40 at step S220, and control of the engine 50 at step S222. These control procedures are identical with those executed at steps S174 through S178 in the flowchart of braking torque control routine shown in Fig. 13 and thus not described here.

While the vehicle runs on a long downhill road, the continuous braking process routine described above realizes continuous braking of the drive shaft 22 via the clutch motor 30 and the assist motor 40, based on the state of the battery 94. When the residual capacity BRM of the battery 94 is less than the threshold value B2, the braking energy Pd is efficiently regenerated to charge the battery 94. This desirably enhances the energy efficiency. When the residual capacity BRM of the battery 94 is not less than the threshold value B2, on the contrary, the controller 80 selects braking by the power control of the clutch motor 30 and controls the clutch motor 30 and the assist motor 40 to make the electrical energy consumed by the clutch motor 30 coincident with the electrical energy regenerated by the assist motor 40. This structure effectively prevents the battery 94 from being excessively charged.

In accordance with a preferable application, plural combinations of the continuous braking torque Tds used at step S206 and the deviation $\Delta N2$ used at step S212 in the continuous braking process routine are prepared, and one of the plural combinations is selected in response to an instruction given by the driver. This enables braking of the drive shaft 22 by a plurality of continuous braking processes with different continuous braking torques. The driver can thus drive the vehicle smoothly with the selected continuous braking torque suitable for the degree of downhill slope.

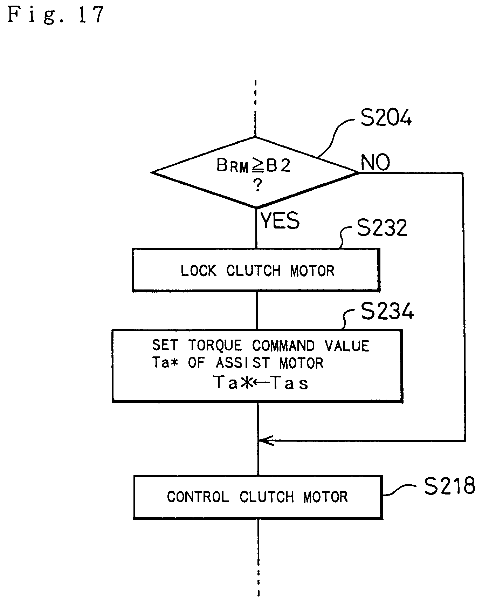

In the structure of the embodiment, when the residual capacity BRM of the battery 94 is not less than the threshold value B2, the drive shaft 22 is controlled by the combination of braking by the power control of the clutch motor 30 and braking by the regenerative control of the assist motor 40. In a modified structure, the outer rotor 32 and the inner rotor 34 of the clutch motor 30 are locked by electromagnetic means for the purpose of braking the drive shaft 22. A modified continuous braking process routine shown in the flowchart of Fig. 17 is, for example, applicable to such a modified structure.

The modified routine includes steps S232 and S234 in place of steps S212 through S216 in the continuous braking process routine of Fig. 16. The control CPU 90 gives an instruction of electromagnetically locking the outer rotor 32 and the inner rotor 34 of the clutch motor 30 at step S232 and sets a torque Tas in the assist motor 40 at step S234. A constant current flowing through the clutch motor 30 via the first driving circuit 91 at a given voltage locks the clutch motor 30. The control process of the clutch motor 30 at step S218 accordingly makes the constant current flow through the clutch motor 30. The torque Tas set in the assist motor 40 at step S234 is used to regenerate the electrical energy required for making the clutch motor 30 in the locked state. The electrical energy regenerated by the assist motor 40 is determined by multiplying the torque command value Ta* by the revolving speed Nd of the drive shaft 22, whereas the electrical energy consumed by the clutch motor 30 is constant irrespective of the revolving speed Nd of the drive shaft 22. The torque Tas depends upon the revolving speed Nd of the drive shaft 22. The torque Tas corresponding to the revolving speed Nd of the drive shaft 22 input at step S200 in the flowchart of Fig. 16 is, for example, read from a map previously set and stored in the ROM 90b. The torque Tas thus determined is set as the torque command value Ta* of the assist motor 40.

The modified continuous braking process routine thus described locks the clutch motor 30 to realize braking via the engine 50, that is, to execute the braking of the drive shaft 22 by means of engine brake. Not the electrical energy stored in the battery 94 but the electrical energy regenerated by the assist motor 40 is used to lock the clutch motor 30.

Although the electrical energy used for locking the clutch motor 30 is regenerated by the assist motor 40 in this modified example, regeneration by the assist motor 40 may be omitted from the process according to the requirements.

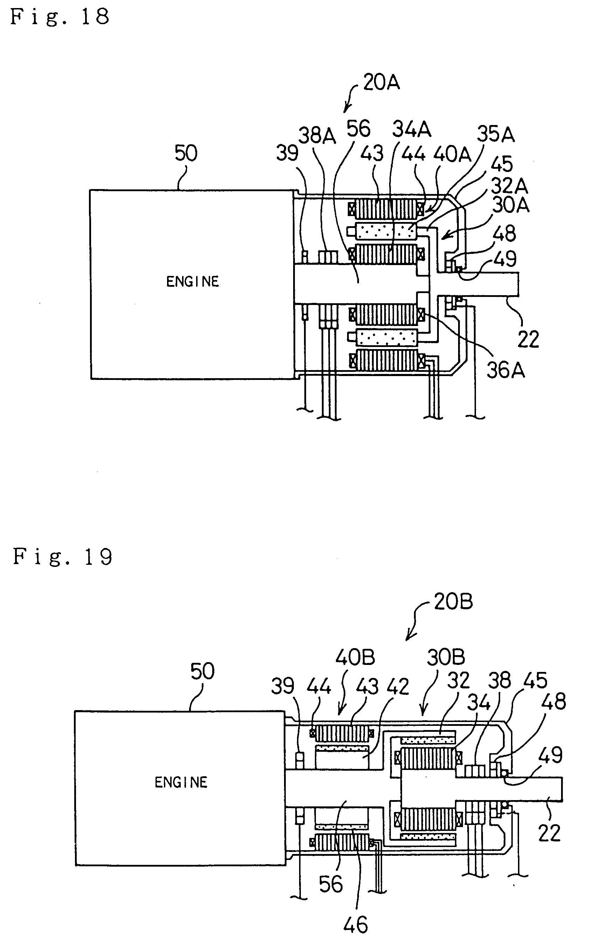

In the structure of the power output apparatus 20 shown in Fig. 1, the clutch motor 30 and the assist motor 40 are separately attached to the different positions of the drive shaft 22. Like a modified power output apparatus 20A illustrated in Fig. 18, however, the clutch motor and the assist motor may integrally be joined with each other. A clutch motor 30A of the power output apparatus 20A includes an inner rotor 34A connecting with the crankshaft 56 and an outer rotor 32A linked with the drive shaft 22. Three-phase coils 36A are attached to the inner rotor 34A, and permanent magnets 35A are set on the outer rotor 32A in such a manner that the outer surface and the inner surface thereof have different magnetic poles. An assist motor 40A includes the outer rotor 32A of the clutch motor 30A and a stator 43 with three-phase coils 44 mounted thereon. In this structure, the outer rotor 32A of the clutch motor 30A also works as a rotor of the assist motor 40A. Since the three-phase coils 36A are mounted on the inner rotor 34A connecting with the crankshaft 56, a rotary transformer 38A for supplying electric power to the three-phase coils 36A of the clutch motor 30A is attached to the crankshaft 56.

In the power output apparatus 20A, the voltage applied to the three-phase coils 36A on the inner rotor 34A is controlled against the inner-surface magnetic pole of the permanent magnets 35A set on the outer rotor 32A. This allows the clutch motor 30A to work in the same manner as the clutch motor 30 of the power output apparatus 20 shown in Fig. 1. The voltage applied to the three-phase coils 44 on the stator 43 is controlled against the outer-surface magnetic pole of the permanent magnets 35A set on the outer rotor 32A. This allows the assist motor 40A to work in the same manner as the assist motor 40 of the power output apparatus 20. The control procedures applied to the power output apparatus 20 as described with the drawings of Figs. 5 through 17 are also applicable to the power output apparatus 20A.

As discussed above, the outer rotor 32A functions concurrently as one of the rotors in the clutch motor 30A and as the rotor of the assist motor 40A, thereby effectively reducing the size and weight of the whole power output apparatus 20A.

Fig. 19 schematically illustrates an essential part of another power output apparatus 20B as a second embodiment of the present invention. The power output apparatus 20B of Fig. 19 has a similar structure to that of the power output apparatus 20 of Fig. 1, except that the assist motor 40B is attached to the crankshaft 56 placed between the engine 50 and the clutch motor 30B. In the power output apparatus 20B of the second embodiment, like numerals and symbols denote like elements as those of the power output apparatus 20 of Fig. 1. The symbols used in the description have like meanings unless otherwise specified.

The following describes the essential operation of the power output apparatus 20B shown in Fig. 19. By way of example, it is assumed that the engine 50 is driven with a torque Te and at a revolving speed Ne. When a torque Ta is added to the crankshaft 56 by the assist motor 40B linked with the crankshaft 56, the sum of the torques (Te+Ta) consequently acts on the crankshaft 56. When the clutch motor 30B is controlled to produce the torque Tc equal to the sum of the torques (Te+Ta), the torque Tc (=Te+Ta) is transmitted to the drive shaft 22.

When the revolving speed Ne of the engine 50 is greater than the revolving speed Nd of the drive shaft 22, the clutch motor 30B regenerates electric power based on the revolving speed difference Nc between the revolving speed Ne of the engine 50 and the revolving speed Nd of the drive shaft 22. The regenerated power is supplied to the assist motor 40B via the power lines P1 and P2 and the second driving circuit 92 to activate the assist motor 40B. Provided that the torque Ta of the assist motor 40B is substantially equivalent to the electric power regenerated by the clutch motor 30B, free torque conversion is allowed for the energy output from the engine 50 within a range holding the relationship of Equation (6) given below. Since the relationship of Equation (6) represents the ideal state with an efficiency of 100%, (Tc×Nd) is a little smaller than (Te×Ne) in the actual state.

$$Te \times Ne = Tc \times Nd \qquad (6)$$

Referring to Fig. 4, under the condition that the crankshaft 56 rotates with the torque T1 and at the revolving speed N1, the energy corresponding to the sum of the regions G1+G3 is regenerated by the clutch motor 30B and supplied to the assist motor 40B. The assist motor 40B converts the received energy in the sum of the regions G1+G3 to the energy corresponding to the sum of the regions G2+G3 and transmits the converted energy to the crankshaft 56.

When the revolving speed Ne of the engine 50 is smaller than the revolving speed Nd of the drive shaft 22, the clutch motor 30B works as a normal motor. In the clutch motor 30B, the inner rotor 34 rotates relative to the outer rotor 32 in the direction of rotation of the drive shaft 22 at a revolving speed defined by the absolute value of the revolving speed difference Nc (=Ne-Nd) . Provided that the torque Ta of the assist motor 40B is set to a negative value, which enables the assist motor 40B to regenerate electric power substantially equivalent to the electrical energy consumed by the clutch motor 30B, free torque conversion is also allowed for the energy output from the engine 50 within the range holding the relationship of Equation (6) given above.

Referring to Fig. 4, under the condition that the crankshaft 56 rotates with the torque T2 and at the revolving speed N2, the energy corresponding to the region G2 is regenerated by the assist motor 40B and consumed by the clutch motor 30B as the energy corresponding to the region G1.

The braking procedure via the clutch motor 30 applied to the power output apparatus 20 of the first embodiment as described with the drawings of Figs. 5 through 12 is also applicable to the power output apparatus 20B of the second embodiment while the assist motor 40B is inactivated. This structure effects braking of the drive shaft 22 by the power control of the clutch motor 30B or the regenerative control of the clutch motor 30B. Detailed description of the braking procedure via the clutch motor 30B is given in the first embodiment and is thus omitted here. The following describes the braking procedure via both the clutch motor 30B and the assist motor 40B. The structure of the power output apparatus 20B of the second embodiment, in which the assist motor 40B is not linked with the drive shaft 22, does not enable braking of the drive shaft 22 only via the assist motor 40B.

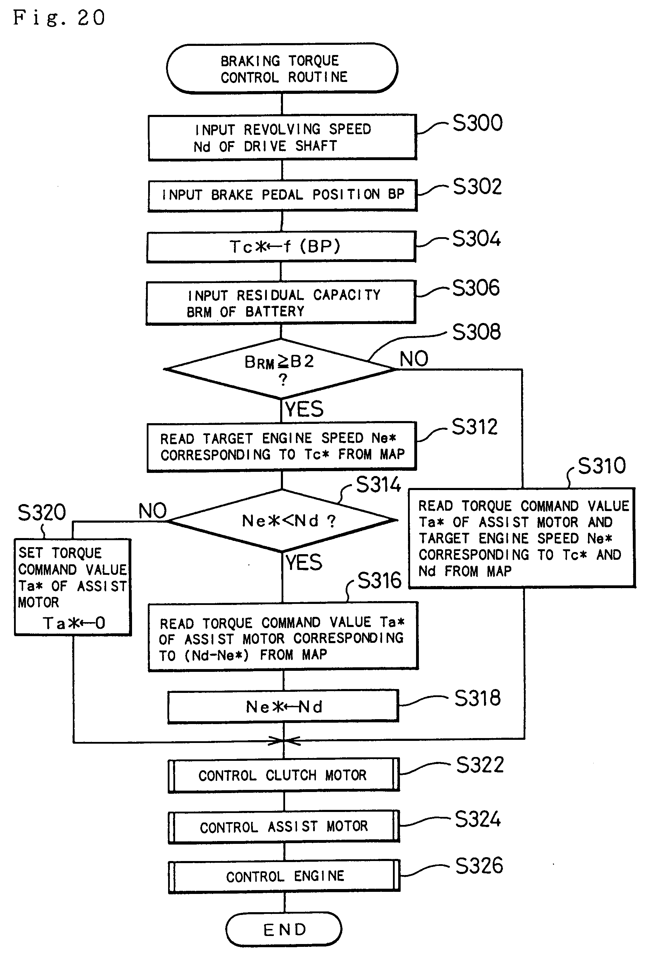

In the braking operation via the clutch motor 30 of the first embodiment, setting the torque command value Tc* of the clutch motor 30 determines the minimum revolving speed Ne of the engine 50 based on the graph of Fig. 5 or Fig. 8. Namely the revolving speed Ne of the engine 50 should be not less than the minimum value. In the power output apparatus 20B of the second embodiment, the assist motor 40B is attached to the crankshaft 56 of the engine 50. Regenerative control of the assist motor 40B thus enables the revolving speed Ne of the engine 50 to be less than a minimum value read from the graph of Fig. 5 depending upon a torque command value Tc* of the clutch motor 30B. Power control of the assist motor 40B, on the other hand, enables the revolving speed Ne of the engine 50 to be greater than the minimum value depending upon the torque command value Tc* of the clutch motor 30B without controlling the fuel injection into the engine 50. The engine 50 accordingly rotates at a revolving speed (read from the graph of Fig. 5) corresponding to a torque difference $\Delta Tca$ (=Tc-Ta) between the torque Tc for braking the drive shaft 22 via the clutch motor 30B and the torque Ta for braking the cranks shaft 56 via the assist motor 40B. The braking procedure via both the clutch motor 30B and the assist motor 40B is described with the flowchart of braking torque control routine illustrated in Fig. 20.

The braking torque control routine is executed repeatedly at predetermined time intervals while the driver is stepping on the brake pedal 64B. When the program enters the braking torque control routine, the control CPU 90 of the controller 80 first receives an input of the revolving speed Nd of the drive shaft 22 at step S300, and reads a brake pedal position BP from the brake pedal position sensor 65B at step S302. The control CPU 90 computes a torque command value Tc* of the clutch motor 30B corresponding to the input brake pedal position BP at step S304. The similar routine of the first embodiment computes the output torque command value Td* corresponding to the input brake pedal position BP. In the second embodiment, however, the torque command value Tc* of the clutch motor 30B is taken to be equal to the output torque command value Td*, and the value led by the process of determining the output torque command value Td* in the first embodiment is set as the torque command value Tc*. The control CPU 90 then receives an input of the residual capacity BRM of the battery 94 measured by the residual capacity meter 99 at step S306, and compares the input residual capacity BRM with a threshold value B2 at step S308.

When the residual capacity BRM of the battery 94 is less than the threshold value B2, the program proceeds to step S310, at which the control CPU 90 determines a torque command value Ta* of the assist motor 40B and a target engine speed Ne* corresponding to the torque command value Tc* of the clutch motor 30B and the revolving speed Nd of the drive shaft 22, using a map representing the relationship between the torque command value Tc* of the clutch motor 30B, the revolving speed Nd of the drive shaft 22, the torque command value Ta* of the assist motor 40B, and the target engine speed Ne*. The map used at step S310 in the second embodiment gives combinations of the target engine speed Ne* and the torque command value Ta* of the assist motor 40B for most efficiently regenerating an electrical energy from the braking energy Pd, which is determined as a product of a given torque command value Tc* of the clutch motor 30B and a given revolving speed Nd of the drive shaft 22.

A regenerative energy P is the sum of an electrical energy Pc regenerated by the clutch motor 30B and an electrical energy Pa regenerated by the assist motor 40B and is expressed by Equation (7) given below:

$$P = Pc + Pa \qquad (7)$$
$$= \{Kcs \times Tc^* \times (Nd-Ne^*)\} + \{Kas \times Ta^* \times Ne^*\}$$

where Kcs denotes an efficiency of regeneration by the clutch motor 30B, and Kas represents an efficiency of regeneration by the assist motor 40B. The revolving speed Ne of the engine 50 and the torque difference $\Delta Tca$ (=Tc-Ta) between the torque Tc of the clutch motor 30B and the torque Ta of the assist motor 40B bear the relationship shown in the graph of Fig. 5 under the condition of ceased fuel injection into the engine 50. The target engine speed Ne* is thus expressed as a function of the torque command value Ta*. The regenerative energy P is determined as a function of the torque command value Ta* for the input torque command value Tc* and revolving speed Nd. This results in determining the torque command value Ta* for maximizing the regenerative energy P and thereby the target engine speed Ne*. This relationship is stored as a map in the ROM 90b. The map used at step S310 in the second embodiment depends upon the types and characteristics of the clutch motor 30B and the assist motor 40B as well as the characteristics of the engine 50.

When the residual capacity BRM of the battery 94 is determined to be not less than the threshold value B2 at step S308, on the other hand, the program proceeds to step S312, at which the control CPU 90 reads a target engine speed Ne* of the engine 50 corresponding to the given torque command value Tc* of the clutch motor 30B from a map (for example, the graph of Fig. 5) previously set and stored in the ROM 90b. At step S314, the target engine speed Ne* thus determined is compared with the revolving speed Nd of the drive shaft 22.

When the target engine speed Ne* is less than the revolving speed Nd, the program proceeds to step S316, at which the control CPU 90 determines a torque command value Ta* of the assist motor 40B corresponding to a difference $\Delta Nde$ between the revolving speed Nd and the target engine speed Ne* with a map previously set and stored in the ROM 90b. The map used at step S316 in the second embodiment includes experimental data representing the relationship between the difference $\Delta Nde$ and the torque command value Ta* of the assist motor 40B required for changing the revolving speed of the engine 50 from the target engine speed Ne* to the revolving speed Nd. The revolving speed Ne of the engine 50 is increased to the revolving speed Nd by means of the assist motor 40B, because the revolving speed Ne of the engine 50 less than the revolving speed Nd of the drive shaft 22 does not enable the braking operation by the power control of the clutch motor 30B. After determining the torque command value Ta* of the assist motor 40B at step S316, the control CPU 90 sets the revolving speed Nd of the drive shaft 22 to the target engine speed Ne* at step S318.

When the target engine speed Ne* is determined to be not less than the revolving speed Nd at step S314, on the other hand, the program proceeds to step S320 at which the control CPU 90 sets the value '0' to the torque command value Ta* of the assist motor 40B. This is because the target engine speed Ne* not less than the revolving speed Nd effects the braking operation by the regenerative control of the clutch motor 30B. When the torque command value Ta* is equal to zero, the power control of the clutch motor 30B is performed with the power stored in the battery 94. Alternatively, an adequate value may be set to the torque command value Ta* of the assist motor 40B in the range of making the target engine speed Ne* not less than the revolving speed Nd, thereby allowing the electrical energy consumed by the clutch motor 30B to be regenerated by the assist motor 40B.

After the torque command value Ta* of the assist motor 40B and the target engine speed Ne* of the engine 50 are set by the processing at step S310 or by the processing at steps S312 through S320, the control CPU 90 executes control of the clutch motor 30B at step S322, control of the assist motor 40B at step S324, and control of the engine 50 at step S326. These control procedures are identical with those executed at steps S174 through S178 in the flowchart of braking torque control routine shown in Fig. 13 and thus not described here.

The braking torque control routine executed by the power output apparatus 20B of the second embodiment realizes braking of the drive shaft 22 via both the clutch motor 30B and the assist motor 40B, based on the state of the residual capacity BRM of the battery 94. When the residual capacity BRM of the battery 94 is less than the threshold value B2, the braking energy Pd is efficiently regenerated to charge the battery 94. This desirably enhances the energy efficiency. When the residual capacity BRM of the battery 94 is not less than the threshold value B2, on the contrary, braking by the power control of the clutch motor 30B effectively prevents the battery 94 from being excessively charged.

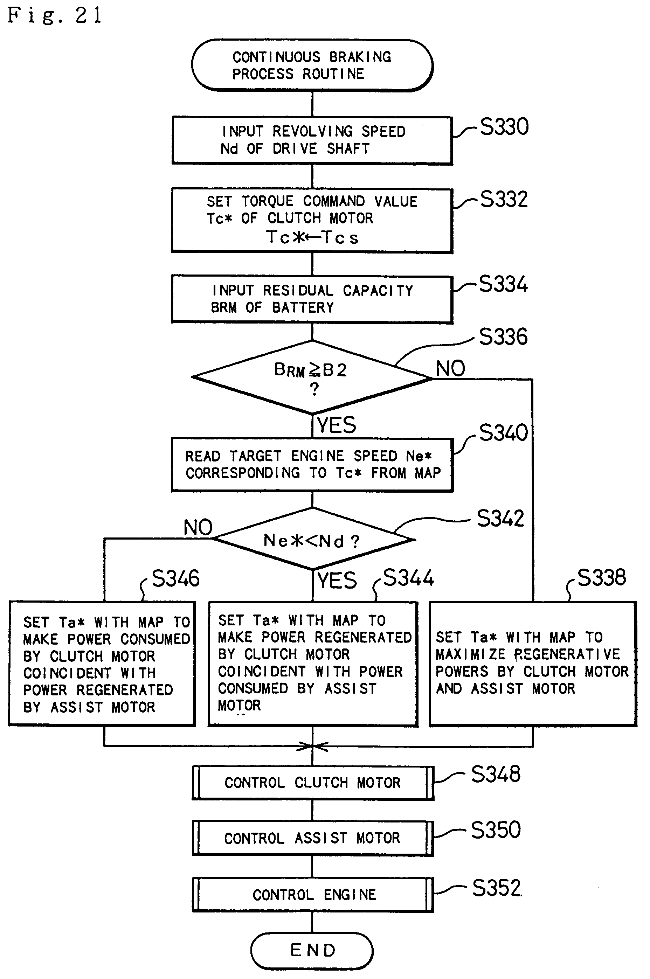

The flowchart of Fig. 21 shows a continuous braking process routine executed to continuously apply the braking force to the drive shaft 22, for example, when the vehicle with the power output apparatus 20B of the second embodiment mounted thereon runs on a long downhill road. This routine is repeatedly executed at predetermined time intervals when the driver does not step on either the accelerator pedal 64A or the brake pedal 64B or gives an instruction to activate an engine brake while the vehicle is in the running condition.

When the program enters the continuous braking process routine, the control CPU 90 of the controller 80 first reads the revolving speed Nd of the drive shaft 22 at step S330 and sets a continuous braking torque Tcs to the torque command value Tc* of the clutch motor 30B at step S332. The continuous braking torque Tcs is set as a braking torque applied onto the drive shaft 22 when neither the accelerator pedal 64A nor the brake pedal 64B is stepped on. The control CPU 90 then receives an input of the residual capacity BRM of the battery 94 measured by the residual capacity meter 99 at step S334 and compares the input residual capacity BRM with a threshold value B2 at step S336.

When the residual capacity BRM of the battery 94 is less than the threshold value B2, the program proceeds to step S338, at which the control CPU 90 reads a torque command value Ta* of the assist motor 40B corresponding to the revolving speed Nd of the drive shaft 22 from a map representing the relationship between the revolving speed Nd of the drive shaft 22 and the torque command value Ta* of the assist motor 40B. The map used at step S338 in the second embodiment gives combinations of the revolving speed Nd of the drive shaft Nd and the torque command value Ta* of the assist motor 40B for most efficiently regenerating an electrical energy from the braking energy Pd, which is determined as a product of a given torque revolving speed Nd and a given continuous braking torque Tcs. The concrete process executed at step S338 is similar to that executed at step S310 in the braking torque control routine of Fig. 20 and thus not described here.

When the residual capacity BRM of the battery 94 is determined to be not less than the threshold value B2 at step S336, on the other hand, the program proceeds to step S340, at which the control CPU 90 reads a target engine speed Ne* of the engine 50 corresponding to the given torque command value Tc* of the clutch motor 30B from a map (for example, the graph of Fig. 5) previously set and stored in the ROM 90b. At step S342, the target engine speed Ne* thus determined is compared with the revolving speed Nd of the drive shaft 22.

When the target engine speed Ne* is less than the revolving speed Nd, the program selects the braking procedure by the regenerative control of the clutch motor 30B. At step S344, the control CPU 90 executes power control of the assist motor 40B within the range that the revolving speed Ne of the engine 50 does not exceed the revolving speed Nd, and sets the torque command value Ta* of the assist motor 40B to make the electrical energy Pc regenerated by the clutch motor 30B coincident with the electrical energy Pa consumed by the assist motor 40B. This means that the torque command value Ta* of the assist motor 40B is determined to satisfy Equation (8) given below. The process of determining the torque command value Ta* according to Equation (8) is identical with the process executed at step S310 in the braking torque control routine of Fig. 20.

$$Pc = Kcs \times Tc^* \times (Nd-Ne) = Ta^* \times Ne = Pa \quad (8)$$

When the target engine speed Ne* is determined not less than the revolving speed Nd at step S342, on the other hand, the program selects the braking procedure by the power control of the clutch motor 30B. At step S346, the control CPU 90 executes regenerative control of the assist motor 40B within the range that the revolving speed Ne of the engine 50 is not less than the revolving speed Nd, and sets the torque command value Ta* of the assist motor 40B to make the electrical energy Pc consumed by the clutch motor 30B coincident with the electrical energy Pa regenerated by the assist motor 40B. This means that the torque command value Ta* of the assist motor 40B is determined to satisfy Equation (9) given below:

$$Pc = Tc^* \times (Nd-Ne) = Kas \times Ta^* \times Ne = Pa \quad (9)$$

After the torque command value Ta* of the assist motor 40B and the target engine speed Ne* are set by the processing at step S338 or by the processing at steps S340 through S346, the control CPU 90 executes control of the clutch motor 30B at step S348, control of the assist motor 40B at step S350, and control of the engine 50 at step S352. These control procedures are identical with those executed at steps S174 through S178 in the flowchart of braking torque control routine shown in Fig. 13 and thus not described here.

While the vehicle runs on a long downhill road, the continuous braking process routine executed by the power output apparatus 20B of the second embodiment realizes continuous braking of the drive shaft 22 via the clutch motor 30B and the assist motor 40B, based on the state of the battery 94. When the residual capacity BRM of the battery 94 is less than the threshold value B2, the braking energy Pd is efficiently regenerated to charge the battery 94. This desirably enhances the energy efficiency. When the residual capacity BRM of the battery 94 is not less than the threshold value B2, on the contrary, the controller 80 effects braking by combining the power control of the clutch motor 30B with the regenerative control of the assist motor 40B or alternatively by combining the regenerative control of the clutch motor 30B with the power control of the assist motor 40B. The controller 80 controls the clutch motor 30B and the assist motor 40B to make the electrical energy regenerated coincident with the electrical energy consumed. This structure effectively prevents the battery 94 from being excessively charged or fully discharged.

In accordance with a preferable application, a plurality of continuous braking torques Tcs used at step S332 in the continuous braking process routine are prepared, and one of the continuous braking torques Tcs is selected in response to an instruction given by the driver. This enables braking of the drive shaft 22 by a plurality of continuous braking processes with different continuous braking torques. The driver can thus drive the vehicle smoothly with the selected continuous braking torque suitable for the degree of downhill slope.

Like the modification of the first embodiment shown in Fig. 17, in the structure of the second embodiment, the outer rotor 32 and the inner rotor 34 of the clutch motor 30B may be locked by electromagnetic means for the purpose of braking the drive shaft 22 when the residual capacity BRM of the battery 94 is not less than the threshold value B2. This effects control by the engine 50, that is, braking of the drive shaft 22 by engine brake.

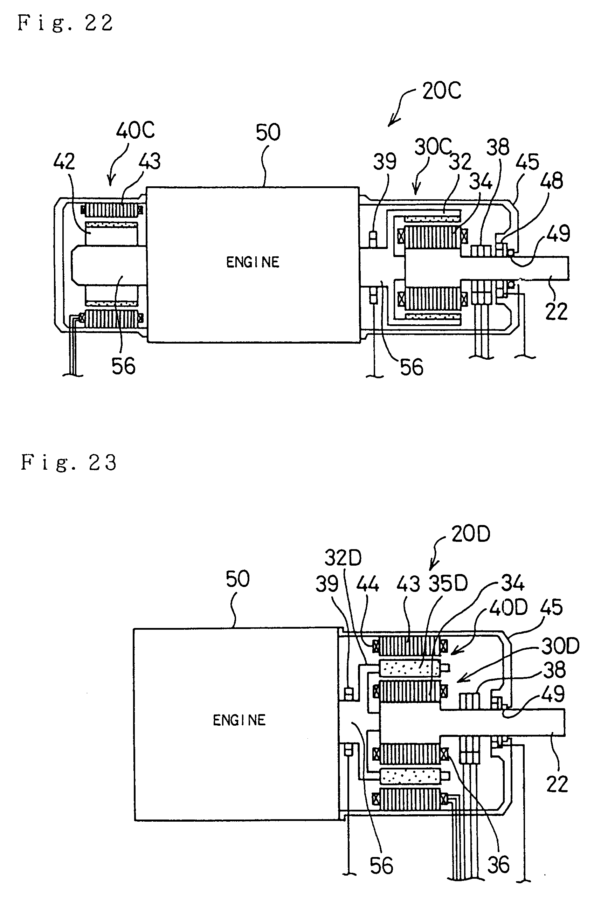

In the power output apparatus 20B of Fig. 19 given as the second embodiment discussed above, the assist motor 40B is attached to the crankshaft 56 placed between the engine 50 and the clutch motor 30B. Like another power output apparatus 20C illustrated in Fig. 22, however, the engine 50 may be interposed between the clutch motor 30C and the assist motor 40C, both of which are linked with the crankshaft 56.

In the power output apparatus 20B of Fig. 19, the clutch motor 30B and the assist motor 40B are separately attached to the different positions of the crankshaft 56. Like a power output apparatus 20D shown in Fig. 23, however, the clutch motor and the assist motor may integrally be joined with each other. A clutch motor 30D of the power output apparatus 20D includes an outer rotor 32D connecting with the crankshaft 56 and an inner rotor 34 linked with the drive shaft 22. Three-phase coils 36 are attached to the inner rotor 34, and permanent magnets 35D are set on the outer rotor 32D in such a manner that the outer surface and the inner surface thereof have different magnetic poles. An assist motor 40D includes the outer rotor 32D of the clutch motor 30D and a stator 43 with three-phase coils 44 mounted thereon. In this structure, the outer rotor 32D of the clutch motor 30D also works as a rotor of the assist motor 40D.

In the power output apparatus 20D, the voltage applied to the three-phase coils 36 on the inner rotor 34 is controlled against the inner-surface magnetic pole of the permanent magnets 35D set on the outer rotor 32D. This allows the clutch motor 30D to work in the same manner as the clutch motor 30B of the power output apparatus 20B shown in Fig. 19. The voltage applied to the three-phase coils 44 on the stator 43 is controlled against the outer-surface magnetic pole of the permanent magnets 35D set on the outer rotor 32D. This allows the assist motor 40D to work in the same manner as the assist motor 40B of the power output apparatus 20B. The control procedures applied to the power output apparatus 20B as described with the drawings of Figs. 5 through 12, Figs. 20 and 21 are also applicable to the power output apparatus 20D.

Like the power output apparatus 20A shown in Fig. 18, in the power output apparatus 20D of Fig. 23, the outer rotor 32D functions concurrently as one of the rotors in the clutch motor 30D and as the rotor of the assist motor 40D, thereby effectively reducing the size and weight of the whole power output apparatus 20D.

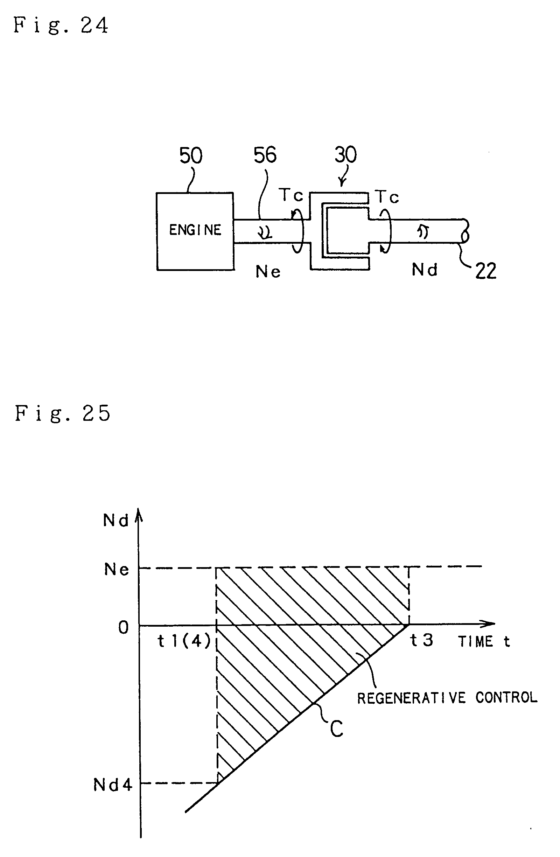

Although both the first embodiment and the second embodiment describe the braking procedures for the vehicle moving forward, the principle of the invention is also applicable to the vehicle moving backward. Fig. 24 shows a braking torque of the clutch motor 30 acting while the vehicle moves backward. Braking via the clutch motor 30 under the backward driving condition is implemented by making a torque Tc of the clutch motor 30 act on the drive shaft 22 in the direction reverse to the rotation of the drive shaft 22. Since the drive shaft 22 rotates in the direction reverse to the rotation of the crankshaft 56 of the engine 50 under the backward driving condition, the torque Tc acting in this state has the direction reverse to that of the torque Tc acting under the forward driving condition. Namely the braking torque of the clutch motor 30 under the backward driving condition accelerates the vehicle in the forward direction.

When the revolving speed Ne of the engine 50 is greater than the revolving speed Nd of the drive shaft 22, the torque Tc of the clutch motor 30 acting under the backward driving condition coincides with a torque of the clutch motor 30 acting on the drive shaft 22 in the rotating direction of the engine 50. This enables the clutch motor 30 to regenerate a power corresponding to the revolving speed difference Nc between the revolving speed Ne of the engine 50 and the revolving speed Nd of the drive shaft 22. The graph of Fig. 25 shows the revolving speed Nd of the drive shaft 22 plotted against the time t and the state of the clutch motor 30 during the braking procedure via the clutch motor 30 under the backward driving condition. The structure of the embodiment does not allow reverse rotation of the crankshaft 56 and thereby effects braking only by the regenerative control of the clutch motor 30 under the backward driving condition. In a modified structure allowing reverse rotation of the crankshaft 56, however, braking by the power control of the clutch motor 30 is implemented within the range that the revolving speed Nd of reverse rotation of the drive shaft 22 is less than the speed Ne of reverse rotation of the engine 50.

Under the backward driving condition, braking via the assist motor 40 and braking via both the clutch motor 30 and the assist motor 40 are also attainable like the braking via the clutch motor 30 described above.

There may be many other modifications, alternations, and changes without departing from the scope or spirit of essential characteristics of the invention. It is thus clearly understood that the above embodiments are only illustrative and not restrictive in any sense.

The gasoline engine driven by means of gasoline is used as the engine 50 in the above power output apparatuses. The principle of the invention is, however, applicable to other internal combustion engines and external combustion engines, such as Diesel engines, turbine engines, and jet engines.

Permanent magnet (PM)-type synchronous motors are used for the clutch motor 30 and the assist motor 40 in the power output apparatuses described above. Other motors such as variable reluctance (VR)-type synchronous motors, vernier motors, d.c. motors, induction motors, superconducting motors, and stepping motors may be used for the regenerative operation and the power operation.

The rotary transformer 38 used as means for transmitting electric power to the clutch motor 30 may be replaced by a slip ring-brush contact, a slip ring-mercury contact, a semiconductor coupling of magnetic energy, or the like.

In the above power output apparatuses, transistor inverters are used for the first and the second driving circuits 91 and 92. Other examples applicable to the driving circuits 91 and 92 include IGBT (insulated gate bipolar mode transistor) inverters, thyristor inverters, voltage PWM (pulse width modulation) inverters, square-wave inverters (voltage inverters and current inverters), and resonance inverters.

The battery 94 may include Pb cells, NiMH cells, Li cells, or the like cells. A capacitor may be used in place of the battery 94.

Although the power output apparatus is mounted on the vehicle in the above embodiments, it may be mounted on other transportation means like ships and airplanes as well as a variety of industrial machines.

The scope and spirit of the present invention are limited only by the terms of the appended claims.

## Claims

1. A power output apparatus for outputting power to a drive shaft, said power output apparatus comprising:

    an engine having an output shaft;

    a clutch motor comprising a first rotor connected with said output shaft of said engine and a second rotor connected with said drive shaft, said second rotor being coaxial to and rotatable relative to said first rotor, said first and second rotors being electromagnetically connected with each other, whereby power is transmitted between said output shaft of said engine and said drive shaft via the electromagnetic connection of said first and second rotors;

    a clutch motor-driving circuit for controlling a degree of the electromagnetic connection of said first and second rotors of said clutch motor and regulating rotation of said second rotor relative to said first rotor;

    a storage battery being charged with power regenerated by said clutch motor via said clutch motor-driving circuit, and discharging power required for driving said clutch motor via said clutch motor-driving circuit; and

    braking control means for controlling said clutch motor-driving circuit to enable said clutch motor to apply a braking torque to said drive shaft, and making said engine in a predetermined operating condition, so as to brake rotation of said drive shaft.

2. A power output apparatus in accordance with claim 1, wherein said braking control means comprises means for controlling said clutch motor-driving circuit to allow said first rotor and said second rotor of said clutch motor to be electromagnetically locked.

3. A power output apparatus in accordance with claim 1, wherein said braking control means comprises means for controlling said clutch motor based on a difference between a revolving speed of said first rotor and a revolving speed of said second rotor.

4. A power output apparatus in accordance with claim 3, wherein said braking control means comprises means for controlling the revolving speed of said first rotor to effect power control of said clutch motor in the process of braking.

5. A power output apparatus in accordance with claim 3, wherein said braking control means comprises means for controlling the revolving speed of said first rotor to effect regenerative control of said clutch motor in the process of braking.

6. A power output apparatus in accordance with claim 3, said apparatus further comprising:

   battery condition measuring means for measuring condition of said storage battery,

   wherein said braking control means further comprises means for controlling the revolving speed of said first rotor to a predetermined value, which is greater than the revolving speed of said second rotor, when the condition of said storage battery measured by said battery condition mesuring means represents a predetermined charging condition close to a full charge.

7. A power output apparatus for outputting power to a drive shaft, said power output apparatus comprising:

   an engine having an output shaft;

   a clutch motor comprising a first rotor connected with said output shaft of said engine and a second rotor connected with said drive shaft, said second rotor being coaxial to and rotatable relative to said first rotor, said first and second rotors being electromagnetically connected with each other, whereby power is transmitted between said output shaft of said engine and said drive shaft via the electromagnetic connection of said first and second rotors;

   a clutch motor-driving circuit for controlling a degree of the electromagnetic connection of said first and second rotors of said clutch motor and regulating rotation of said second rotor relative to said first rotor;

   an assist motor connected with said drive shaft;

   an assist motor-driving circuit for driving and controlling said assist motor;

   a storage battery being charged with power regenerated by said clutch motor via said clutch motor-driving circuit, being charged with power regenerated by said assist motor via said assist motor-driving circuit, discharging power required for driving said clutch motor via said clutch motor-driving circuit, and discharging power required for driving said assist motor via said assist motor-driving circuit; and

   braking control means for controlling said clutch motor-driving circuit and said assist motor-driving circuit to enable said clutch motor and said assist motor to apply a braking torque to said drive shaft, and making said engine in a predetermined operating condition, so as to brake rotation of said drive shaft.

8. A power output apparatus in accordance with claim 7, said apparatus further comprising:

   braking torque calculation means for computing a braking torque applied to brake said drive shaft, in response to an operation of an operator; and

   braking torque distribution means for distributing the braking torque computed by said braking torque calculation means into a first braking torque applied from said clutch motor to said drive shaft and a second braking torque applied from said assist motor to said drive shaft;

   wherein said braking control means further comprises means for controlling said clutch motor-driving circuit and said assist motor-driving circuit to enable said clutch motor and said assist motor to apply the braking torque to said drive shaft, based on the distribution of the braking torque determined by said braking torque distribution means.

9. A power output apparatus in accordance with claim 8, wherein said braking control means further comprises means for executing power control of said clutch motor and regenerative control of said assist motor, and
   said braking torque distribution means further comprises means for determining the distribution of the braking torque to allow power consumed for the power control of said clutch motor by said braking control means to be covered with power regenerated through the regenerative control of said assist motor by said braking control means.

10. A power output apparatus in accordance with claim 8, wherein said braking control means further comprises means for executing regenerative control of said clutch motor and regenerative control of said assist motor; and

wherein said braking torque distribution means further comprises means for determining the distribution of the braking torque to maximize a sum of power regenerated through the regenerative control of said clutch motor by said braking control means and power regenerated through the regenerative control of said assist motor by said braking control means.

11. A power output apparatus for outputting power to a drive shaft, said power output apparatus comprising:

an engine having an output shaft;

a complex motor comprising a first rotor connected with said output shaft of said engine, a second rotor connected with said drive shaft being coaxial to and rotatable relative to said first rotor, and a stator for rotating said second rotor, said first rotor and said second rotor constituting a first motor, said second rotor and said stator constituting a second motor;

a first motor-driving circuit for driving and controlling said first motor in said complex motor;

a second motor-driving circuit for driving and controlling said second motor in said complex motor;

a storage battery being charged with power regenerated by said first motor via said first motor-driving circuit, being charged with power regenerated by said second motor via said second motor-driving circuit, discharging power required for driving said first motor via said first motor-driving circuit, and discharging power required for driving said second motor via said second motor-driving circuit; and

braking control means for controlling said first motor-driving circuit to enable said first motor to apply a first braking torque to said drive shaft, controlling said second motor-driving circuit to enable said second motor to apply a second braking torque to said drive shaft via said second rotor, and making said engine in a predetermined operating condition, so as to brake rotation of said drive shaft.

12. A power output apparatus in accordance with claim 11, said apparatus further comprising:

braking torque calculation means for computing a braking torque applied to brake said drive shaft, in response to an operation of an operator; and

braking torque distribution means for distributing the braking torque computed by said braking torque calculation means into the first braking torque applied from said first motor to said drive shaft and the second braking torque applied from said second motor to said drive shaft via said second rotor;

wherein said braking control means further comprises means for controlling said first motor-driving circuit to enable said first motor to apply the first braking torque to said drive shaft, and controls said second motor-driving circuit to enable said second motor to apply the second braking torque to said drive shaft via said second rotor, based on the distribution of the braking torque determined by said braking torque distribution means.

13. A power output apparatus for outputting power to a drive shaft, said power output apparatus comprising:

an engine having an output shaft; a clutch motor comprising a first rotor connected with said output shaft of said engine and a second rotor connected with said drive shaft, said second rotor being coaxial to and rotatable relative to said first rotor, said first and second rotors being electromagnetically connected with each other, whereby power is transmitted between said output shaft of said engine and said drive shaft via the electromagnetic connection of said first and second rotors;

a clutch motor-driving circuit for controlling a degree of the electromagnetic connection of said first and second rotors of said clutch motor and regulating rotation of said second rotor relative to said first rotor;

an assist motor connected with said output shaft of said engine;

an assist motor-driving circuit for driving and controlling said assist motor;

a storage battery being charged with power regenerated by said clutch motor via said clutch motor-driving circuit, being charged with power regenerated by said assist motor via said assist motor-driving circuit, discharging power required for driving said clutch motor via said clutch motor-driving circuit, and discharging power required for driving said assist motor via said assist motor-driving circuit; and

braking control means for controlling said clutch motor-driving circuit to enable said clutch motor to apply a first braking torque to said drive shaft, controlling said assist motor-driving circuit to enable said assist motor to apply a second braking torque to said output shaft of said engine, and making said engine in a predetermined operating condition, so as to brake rotation of said drive shaft.

14. A power output apparatus in accordance with claim 13, said apparatus further comprising:

braking torque calculation means for computing a braking torque applied to brake said drive shaft, in response to an operation of an operator; and

braking torque distribution means for distributing the braking torque computed by said braking torque calculation means into the first braking torque applied from said clutch motor to said drive shaft and the second braking torque applied from said assist motor to said output shaft of said engine,

wherein said braking control means comprises means for controlling said clutch motor-driving circuit to enable said clutch motor to apply the first braking torque to said drive shaft, and controls said assist motor-driving circuit to enable said assist motor to apply the second braking torque to said output shaft of said engine, based on the distribution of the braking torque determined by said braking torque distribution means.

15. A power output apparatus in accordance with claim 14, wherein said braking control means comprises means for executing power control of said clutch motor and regenerative control of said assist motor, and
wherein said braking torque distribution means comprises means for determining the distribution of the braking torque to allow power consumed for the power control of said clutch motor by said braking control means to be covered with power regenerated through the regenerative control of said assist motor by said braking control means.

16. A power output apparatus in accordance with claim 14, wherein said braking control means comprises means for executing regenerative control of said clutch motor and regenerative control of said assist motor, and
wherein said braking torque distribution means comprises means for determining the distribution of the braking torque to maximize a sum of power regenerated through the regenerative control of said clutch motor by said braking control means and power regenerated through the regenerative control of said assist motor by said braking control means.

17. A power output apparatus for outputting power to a drive shaft, said power output apparatus comprising:

an engine having an output shaft;

a complex motor comprising a first rotor connected with said output shaft of said engine, a second rotor connected with said drive shaft being coaxial to and rotatable relative to said first rotor, and a stator for rotating said first rotor, said first rotor and said second rotor constituting a first motor, said first rotor and said stator constituting a second motor;

a first motor-driving circuit for driving and controlling said first motor in said complex motor;

a second motor-driving circuit for driving and controlling said second motor in said complex motor;

a storage battery being charged with power regenerated by said first motor via said first motor-driving circuit, being charged with power regenerated by said second motor via said second motor-driving circuit, discharging power required for driving said first motor via said first motor-driving circuit, and discharging power required for driving said second motor via said second motor-driving circuit; and

braking control means for controlling said first motor-driving circuit to enable said first motor to apply a first braking torque to said drive shaft, controlling said second motor-driving circuit to enable said second motor to apply a second braking torque to said output shaft of said engine via said first rotor, and making said engine in a predetermined operating condition, so as to brake rotation of said drive shaft.

18. A power output apparatus in accordance with claim 17, said apparatus further comprising:

braking torque calculation means for computing a braking torque applied to brake said drive shaft, in response to an operation of an operator; and

braking torque distribution means for distributing the braking torque computed by said braking torque calculation means into the first braking torque applied from said first motor to said drive shaft and the second braking torque applied from said second motor to said output shaft of said engine via said first rotor;

wherein said braking control means comprises means for controlling said first motor-driving circuit to enable said first motor to apply the first braking torque to said drive shaft, and controls said second motor-driving circuit to enable said second motor to apply the second braking torque to said output shaft of said engine via said first rotor, based on the distribution of the braking torque determined by said braking torque distribution means.

19. A method of controlling a power output apparatus for outputting power to a drive shaft, said method comprising the steps of:

(a) providing an engine having an output shaft; a clutch motor comprising a first rotor connected with said output shaft of said engine and a second rotor connected with said drive shaft, said second rotor being coaxial to and rotatable relative to said first rotor, said first and second rotors being electromagnetically connected with each other, whereby power is transmitted between said output shaft of said engine and said drive shaft via the electromagnetic connection of said first and second rotors; and a storage battery being charged with power regenerated by said clutch motor, and discharging power required for driving said clutch motor;

(b) enabling said clutch motor to apply a braking torque to said drive shaft and making said engine in a predetermined operating condition, so as to brake rotation of said drive shaft.

20. A method of controlling a power output apparatus for outputting power to a drive shaft, said method comprising the steps of:

(a) providing an engine having an output shaft; a clutch motor comprising a first rotor connected with said output shaft of said engine and a second rotor connected with said drive shaft, said second rotor being coaxial to and rotatable relative to said first rotor, said first and second rotors being electromagnetically connected with each other, whereby power is transmitted between said output shaft of said engine and said drive shaft via the electromagnetic connection of said first and second rotors; an assist motor connected with said drive shaft; and a storage battery being charged with power regenerated by said clutch motor, being charged with power regenerated by said assist motor, discharging power required for driving said clutch motor, and discharging power required for driving said assist motor;

(b) enabling said clutch motor and said assist motor to apply a braking torque to said drive shaft and meking said engine in a predetermined operating condition, so as to brake rotation of said drive shaft.

21. A method in accordance with claim 20, said method further comprising the steps of:

(c) computing the braking torque applied to brake said drive shaft, in response to an operation of an operator;

(d) distributing the braking torque computed in said step (c) into a first braking torque applied from said clutch motor to said drive shaft and a second braking torque applied from said assist motor to said drive shaft; and

(e) enabling said clutch motor and said assist motor to apply the first and second braking torque to said drive shaft, based on the distribution of the braking torque determined in said step (d).

22. A method of controlling a power output apparatus for outputting power to a drive shaft, said method comprising the steps of:

(a) providing an engine having an output shaft; a clutch motor comprising a first rotor connected with said output shaft of said engine and a second rotor connected with said drive shaft, said second rotor being coaxial to and rotatable relative to said first rotor, said first and second rotors being electromagnetically connected with each other, whereby power is transmitted between said output shaft of said engine and said drive shaft via the electromagnetic connection of said first and second rotors; an assist motor connected with said output shaft of said engine; and a storage battery being charged with power regenerated by said clutch motor, being charged with power regenerated by said assist motor, discharging power required for driving said clutch motor , and discharging power required for driving said assist motor;

(b) enabling said clutch motor to apply a first braking torque to said drive shaft, enabling said assist motor to apply a second braking torque to said output shaft of said engine, and making said engine in a predetermined operating condition, so as to brake rotation of said drive shaft.

23. A method in accordance with claim 22, said method further comprising the steps of:

(c) computing a braking torque applied to brake said drive shaft, in response to an operation of an operator;

(d) distributing the braking torque computed in said step (c) into the first braking torque applied from said clutch motor to said drive shaft and the second braking torque applied from said assist motor to said output shaft of said engine; and

(e) enabling said clutch motor to apply the first braking torque to said drive shaft, and enabling said assist motor to apply the second braking torque to said output shaft of said engine, based on the distribution of the braking torque determined in said step (d).

Fig. 1

Fig. 2

Fig. 3

Fig.4

Fig. 5

Tc

Tc (B)
Tc (A)

0          Ne(A) Ne(B)          Ne

Fig. 6

REVOLVING
SPEED Nd

Nd1

Nd2                    A

REGENERATIVE CONTROL

PNe

Ne (A)                                 POWER CONTROL

Nd3

0      t1(1) t1(2)  t2  t1(3)    t3      TIME t

Fig. 7

Fig. 8

Fig. 9

Fig. 10

Fig. 11

```
      ┌─────────────────────────────┐
      │    CLUTCH  MOTOR  CONTROL    │
      └─────────────────────────────┘
                    │
      ┌─────────────────────────────┐
      │ INPUT ANGLE θd OF DRIVE SHAFT│──S112
      └─────────────────────────────┘
                    │
      ┌─────────────────────────────┐
      │ INPUT ANGLE θe OF CRANKSHAFT │──S114
      └─────────────────────────────┘
                    │
      ┌─────────────────────────────┐
      │  COMPUTE RELATIVE ANGLE θc   │──S116
      │      θc = θe − θd            │
      └─────────────────────────────┘
                    │
      ┌─────────────────────────────┐
      │  MEASURE CLUTCH MOTOR CURRENTS│──S118
      │        Iuc, Ivc              │
      └─────────────────────────────┘
                    │
      ┌─────────────────────────────┐
      │  TRANSFORMATION OF COORDINATES│──S120
      │                              │
      └─────────────────────────────┘
```

TRANSFORMATION OF COORDINATES (S120)

$$\begin{bmatrix} Idc \\ Iqc \end{bmatrix} = \sqrt{2} \begin{bmatrix} -\sin(\theta c - 120) & \sin\theta c \\ -\cos(\theta c - 120) & \cos\theta c \end{bmatrix} \begin{bmatrix} Iuc \\ Ivc \end{bmatrix}$$

COMPUTE VOLTAGE COMMAND VALUES (S122)

$Vdc = Kp1 \cdot \Delta Idc + \Sigma Ki1 \cdot \Delta Idc$
$Vqc = Kp2 \cdot \Delta Iqc + \Sigma Ki2 \cdot \Delta Iqc$
$\Delta Idc = Idc* - Idc$
$\Delta Iqc = Iqc* - Iqc$

TRANSFORMATION OF COORDINATES
FOR VOLTAGE COMMAND VALUES (S124)

$$\begin{bmatrix} Vuc \\ Vvc \end{bmatrix} = \sqrt{\frac{2}{3}} \begin{bmatrix} \cos\theta c & -\sin\theta c \\ \cos(\theta c - 120) & -\sin(\theta c - 120) \end{bmatrix} \begin{bmatrix} Vdc \\ Vqc \end{bmatrix}$$

$Vwc = -Vuc - Vvc$

PWM CONTROL ──S126

END

34

Fig. 12

BRAKING PROCESS ROUTINE

INPUT BRAKE PEDAL POSITION BP — S130

$Tc* \leftarrow f(BP)$ — S132

INPUT RESIDUAL CAPACITY BRM OF BATTERY — S136

S138

$BRM \geq B1$ ?

NO

YES

S140

BRAKING BY POWER CONTROL OF CLUTCH MOTOR

S142

BRAKING BY REGENERATIVE CONTROL OF CLUTCH MOTOR

END

EP 0 743 217 A2

Fig. 13

```
        ( BRAKING TORQUE CONTROL ROUTINE )
                        │
        ┌───────────────────────────────┐
        │ INPUT REVOLVING SPEED Nd       │────S150
        │ OF DRIVE SHAFT                 │
        └───────────────────────────────┘
                        │
        ┌───────────────────────────────┐
        │ INPUT BRAKE PEDAL              │────S152
        │ POSITION BP                    │
        └───────────────────────────────┘
                        │
        ┌───────────────────────────────┐
        │ Td*←f (BP)                     │────S154
        └───────────────────────────────┘
                        │
        ┌───────────────────────────────┐
        │ INPUT RESIDUAL CAPACITY        │────S156
        │ BRM OF BATTERY                 │
        └───────────────────────────────┘
                        │                    S158
                   ╱─────────╲
                  ╱  BRM≧B2   ╲      NO
                  ╲     ?     ╱───────────────┐
                   ╲─────────╱                │
                     │ YES                    │
```

$B_{RM} \geqq B2$ ?

$T_d* \leftarrow f (BP)$

$N_e* \leftarrow Nd + \Delta N1$

S166 — SET TARGET ENGINE SPEED Ne*   $Ne* \leftarrow Nd + \Delta N1$

S160 — $Pd = Td* \times Nd$

S168 — READ TORQUE COMMAND VALUE Tc* OF CLUTCH MOTOR CORRESPONDING TO Ne* FROM MAP

S162 — READ TORQUE COMMAND VALUES Tc* AND Ta* OF CLUTCH MOTOR AND ASSIST MOTOR CORRESPONDING TO Pd FROM MAP

S170 — Tc* > Td* ?

S171 — Tc* ← Td*

S164 — READ TARGET ENGINE SPEED Ne* CORRESPONDING TO Tc* FROM MAP

S172 — SET TORQUE COMMAND VALUE Ta* OF ASSIST MOTOR   $Ta* = Td* - Tc*$

S174 — CONTROL CLUTCH MOTOR

S176 — CONTROL ASSIST MOTOR

S178 — CONTROL ENGINE

( END )

36

Fig. 14

Fig. 15

ASSIST MOTOR CONTROL

INPUT ANGLE $\theta d$ OF DRIVE SHAFT — S180

MEASURE ASSIST MOTOR CURRENTS
Iua, Iva — S182

TRANSFORMATION OF COORDINATES — S184

$$\begin{bmatrix} Ida \\ Iqa \end{bmatrix} = \sqrt{2} \begin{bmatrix} -\sin(\theta d - 120) & \sin \theta d \\ -\cos(\theta d - 120) & \cos \theta d \end{bmatrix} \begin{bmatrix} Iua \\ Iva \end{bmatrix}$$

COMPUTE VOLTAGE COMMAND VALUES — S186

$$Vda = Kp1 \cdot \Delta Ida + \Sigma Ki1 \cdot \Delta Ida$$
$$Vqa = Kp2 \cdot \Delta Iqa + \Sigma Ki2 \cdot \Delta Iqa$$
$$\Delta Ida = Ida * - Ida$$
$$\Delta Iqa = Iqa * - Iqa$$

TRANSFORMATION OF COORDINATES
FOR VOLTAGE COMMAND VALUES — S188

$$\begin{bmatrix} Vua \\ Vva \end{bmatrix} = \sqrt{\frac{2}{3}} \begin{bmatrix} \cos \theta d & -\sin \theta d \\ \cos(\theta d - 120) & -\sin(\theta d - 120) \end{bmatrix} \begin{bmatrix} Vda \\ Vqa \end{bmatrix}$$
$$Vwa = -Vua - Vva$$

PWM CONTROL — S190

RET

Fig. 16

```
        ┌─────────────────────────┐
        │   CONTINUOUS BRAKING    │
        │   PROCESS ROUTINE       │
        └───────────┬─────────────┘
                    │
        ┌───────────┴─────────────┐
        │ INPUT REVOLVING SPEED Nd│── S200
        │ OF DRIVE SHAFT          │
        └───────────┬─────────────┘
                    │
        ┌───────────┴─────────────┐
        │ INPUT RESIDUAL CAPACITY │── S202
        │ BRM OF BATTERY          │
        └───────────┬─────────────┘
                    │
                   ╱ ╲  S204
                  ╱BRM≧╲    NO
                 ╱ B2   ╲──────────────────────┐
                 ╲  ?   ╱                       │
                  ╲    ╱                        │
                   ╲  ╱                         │
                 YES │                          │
```

**S212** — SET TARGET ENGINE SPEED Ne*
$Ne* \leftarrow Nd + \Delta N2$

**S206** — $Pd \leftarrow Tds \times Nd$

**S214** — READ TORQUE COMMAND VALUE Tc* OF CLUTCH MOTOR CORRESPONDING TO Ne* FROM MAP

**S208** — READ TORQUE COMMAND VALUES Tc* AND Ta* OF CLUTCH MOTOR AND ASSIST MOTOR CORRESPONDING TO Pd FROM MAP

**S216** — SET TORQUE COMMAND VALUE Ta* OF ASSIST MOTOR
$Ta* \leftarrow Tc* \cdot \Delta N2 / (Ksa \times Nd)$

**S210** — READ TARGET ENGINE SPEED Ne* CORRESPONDING TO Tc* FROM MAP

**S218** — CONTROL CLUTCH MOTOR

**S220** — CONTROL ASSIST MOTOR

**S222** — CONTROL ENGINE

END

Fig. 17

```
                    ┆
                    ┆
                  ╱  ╲                    ⌒ S204
                ╱      ╲
              ╱          ╲        NO
            ╱  BRM ≧ B2    ╲──────────────┐
              ╲    ?      ╱                │
                ╲      ╱                   │
                  ╲  ╱                     │
                   │ YES                   │
                   │            ⌒ S232     │
         ┌─────────────────────┐           │
         │  LOCK CLUTCH MOTOR   │           │
         └─────────────────────┘           │
                   │            ⌒ S234     │
         ┌─────────────────────┐           │
         │ SET TORQUE COMMAND VALUE │      │
         │ Ta* OF ASSIST MOTOR  │          │
         │      Ta*←Tas         │          │
         └─────────────────────┘           │
                   │                        │
                   │←───────────────────────┘
                   │
         ┌─────────────────────┐
         │ CONTROL CLUTCH MOTOR │ ⌒ S218
         └─────────────────────┘
                   ┆
                   ┆
                   ┆
```

Fig. 18

Fig. 19

Fig. 20

```
         ┌─────────────────────────┐
         │    BRAKING TORQUE       │
         │   CONTROL ROUTINE       │
         └─────────────────────────┘
                    │
         ┌─────────────────────────┐
         │  INPUT REVOLVING SPEED  │──── S300
         │   Nd OF DRIVE SHAFT     │
         └─────────────────────────┘
                    │
         ┌─────────────────────────┐
         │ INPUT BRAKE PEDAL POSITION BP │──── S302
         └─────────────────────────┘
                    │
         ┌─────────────────────────┐
         │       Tc*←f (BP)        │──── S304
         └─────────────────────────┘
                    │
         ┌─────────────────────────┐
         │  INPUT RESIDUAL CAPACITY │──── S306
         │    BRM OF BATTERY        │
         └─────────────────────────┘
                    │
                  ╱  ╲                              S308
                ╱  BRM≥B2 ╲ ─── NO ────────────────┐
                ╲    ?    ╱                          │
                  ╲    ╱                             │
                    │ YES                            │
         ┌─────────────────────────┐ S312           │
         │ READ TARGET ENGINE SPEED Ne* │           │
         │ CORRESPONDING TO Tc* FROM MAP│           │
         └─────────────────────────┘                │  S310
                    │                    ┌─────────────────────────┐
                  ╱  ╲  S314             │ READ TORQUE COMMAND VALUE│
       NO       ╱      ╲                 │ Ta* OF ASSIST MOTOR AND  │
  ┌─────────  ╱ Ne*<Nd ? ╲               │ TARGET ENGINE SPEED Ne*  │
  │  S320     ╲          ╱               │ CORRESPONDING TO Tc* AND │
  │            ╲        ╱                 │ Nd FROM MAP              │
  │              ╲    ╱                   └─────────────────────────┘
┌──────────┐      │ YES                              │
│SET TORQUE│   ┌─────────────────────────┐ S316      │
│COMMAND VALUE│ │ READ TORQUE COMMAND VALUE Ta* │     │
│Ta* OF ASSIST│ │ OF ASSIST MOTOR CORRESPONDING │     │
│MOTOR     │   │ TO (Nd-Ne*) FROM MAP     │          │
│  Ta*←0   │   └─────────────────────────┘           │
└──────────┘         │                                │
  │          ┌─────────────────────────┐ S318         │
  │          │       Ne*←Nd            │              │
  │          └─────────────────────────┘              │
  └──────────────────┼──────────────────────────────┘
                     │
         ┌─────────────────────────┐
         │   CONTROL CLUTCH MOTOR   │──── S322
         └─────────────────────────┘
                    │
         ┌─────────────────────────┐
         │   CONTROL ASSIST MOTOR   │──── S324
         └─────────────────────────┘
                    │
         ┌─────────────────────────┐
         │      CONTROL ENGINE     │──── S326
         └─────────────────────────┘
                    │
              ┌──────────┐
              │   END    │
              └──────────┘
```

Fig. 21

```
        ┌──────────────────────────┐
        │   CONTINUOUS BRAKING      │
        │   PROCESS ROUTINE         │
        └──────────────────────────┘
                    │
        ┌──────────────────────────┐
        │  INPUT REVOLVING SPEED    │──── S330
        │  Nd OF DRIVE SHAFT        │
        └──────────────────────────┘
                    │
        ┌──────────────────────────┐
        │  SET TORQUE COMMAND VALUE │──── S332
        │  Tc* OF CLUTCH MOTOR      │
        │       Tc*←Tcs             │
        └──────────────────────────┘
                    │
        ┌──────────────────────────┐
        │  INPUT RESIDUAL CAPACITY  │──── S334
        │  BRM OF BATTERY           │
        └──────────────────────────┘
                    │
                ◇ BRM≧B2 ?  ◇──── S336 ──NO──┐
                    │ YES                     │
        ┌──────────────────────────┐         │
        │  READ TARGET ENGINE SPEED │── S340  │
        │  Ne* CORRESPONDING TO     │         │
        │  Tc* FROM MAP             │         │
        └──────────────────────────┘         │
                    │                         │
        ┌── NO ──◇ Ne*<Nd ? ◇──── S342        │
        │           │ YES                     │
  ┌──────────┐ ┌──────────┐ ┌──────────┐
  │S346      │ │S344      │ │S338      │
  │SET Ta*   │ │SET Ta*   │ │SET Ta*   │
  │WITH MAP  │ │WITH MAP  │ │WITH MAP  │
  │TO MAKE   │ │TO MAKE   │ │TO        │
  │POWER     │ │POWER     │ │MAXIMIZE  │
  │CONSUMED  │ │REGENER-  │ │REGENER-  │
  │BY CLUTCH │ │ATED BY   │ │ATIVE     │
  │MOTOR     │ │CLUTCH    │ │POWERS BY │
  │COINCIDENT│ │MOTOR     │ │CLUTCH    │
  │WITH POWER│ │COINCIDENT│ │MOTOR AND │
  │REGENER-  │ │WITH POWER│ │ASSIST    │
  │ATED BY   │ │CONSUMED  │ │MOTOR     │
  │ASSIST    │ │BY ASSIST │ │          │
  │MOTOR     │ │MOTOR     │ │          │
  └──────────┘ └──────────┘ └──────────┘
                    │
        ┌──────────────────────────┐
        │  CONTROL CLUTCH MOTOR     │──── S348
        └──────────────────────────┘
                    │
        ┌──────────────────────────┐
        │  CONTROL ASSIST MOTOR     │──── S350
        └──────────────────────────┘
                    │
        ┌──────────────────────────┐
        │  CONTROL ENGINE           │──── S352
        └──────────────────────────┘
                    │
               ┌─────────┐
               │   END   │
               └─────────┘
```

Fig. 22

Fig. 23

Fig. 24

Fig. 25